# EUROPÄISCHE PATENTANMELDUNG

(11) **EP 3 783 131 A1**
(43) Veröffentlichungstag der Anmeldung: **24.02.2021**
(21) Anmeldenummer: 20191853.9
(22) Anmeldetag: 20.08.2020
(51) Int. Cl.: C25B 1/04, C25B 9/19, C25B 9/73, C25B 11/04

(54) **ELEKTROLYSEUR UND VERFAHREN ZUM AUFSPALTEN VON WASSER**

(30) Priorität: 20.08.2019 DE 102019122356; 28.10.2019 DE 102019129071
(71) Anmelder: Deutsches Zentrum für Luft- und Raumfahrt e.V., 51147 Köln (DE)
(72) Erfinder: Hosseiny, Seyed Schwan, 49696 Molbergen (DE); Mitzel, Jens, 70839 Gerlingen (DE); Gago Rodriguez, Aldo Saul, 70180 Stuttgart (DE)
(74) Vertreter: Hoeger, Stellrecht & Partner Patentanwälte mbB

(57) **Zusammenfassung**

Um einen Elektrolyseur zum Aufspalten von molekularem Wasser in molekularen Wasserstoff und molekularen Sauerstoff unter Einsatz elektrischer Energie, welcher Elektrolyseur eine anodische Halbzelle mit einer Anode und eine kathodische Halbzelle mit einer Kathode umfasst, wobei die anodische Halbzelle und die kathodische Halbzelle durch einen Separator voneinander getrennt sind, wobei die anodische Halbzelle einen anodischen Elektrolyt umfasst, welcher mit der Anode in Kontakt steht, und wobei die kathodische Halbzelle einen kathodischen Elektrolyt umfasst, welcher mit der Kathode in Kontakt steht, wobei die anodische Halbzelle einen anodischen Katalysator umfasst, zu verbessern, wird vorgeschlagen, dass die kathodische Halbzelle zur Erzeugung mindestens eines Mediator-Komplexes mindestens einen Kationen-Komplex enthält, dass der mindestens eine Kationen-Komplex durch Aufnahme mindestens eines Elektrons an der Kathode zum Mediator-Komplex reduzierbar ist und dass der Mediator-Komplex ein katalytisch aktiver chemischer Komplex zum Aufspalten des molekularen Wassers (H₂O) in molekularen Wasserstoff (H₂) und Hydroxidionen (OH⁻) unter Abgabe mindestens eines Elektrons ist.

Ferner wird ein verbessertes Verfahren zum Aufspalten von Wasser in molekularem Wasserstoff und molekularem Sauerstoff unter Einsatz elektrischer Energie vorgeschlagen.

## Beschreibung

Die vorliegende Erfindung betrifft einen Elektrolyseur zum Aufspalten von molekularem Wasser in molekularen Wasserstoff und molekularen Sauerstoff unter Einsatz elektrischer Energie, welcher Elektrolyseur eine anodische Halbzelle mit einer Anode und eine kathodische Halbzelle mit einer Kathode umfasst, wobei die anodische Halbzelle und die kathodische Halbzelle durch einen Separator voneinander getrennt sind, wobei die anodische Halbzelle einen anodischen Elektrolyt umfasst, welcher mit der Anode in Kontakt steht, und wobei die kathodische Halbzelle einen kathodischen Elektrolyt umfasst, welcher mit der Kathode in Kontakt steht, wobei die anodische Halbzelle einen anodischen Katalysator umfasst.

Ferner betrifft die vorliegende Erfindung ein Verfahren zum Aufspalten von molekularem Wasser in molekularen Wasserstoff und molekularen Sauerstoff unter Einsatz elektrischer Energie, bei welchem Verfahren Hydroxidionen in einer anodischen Halbzelle mit einer Anode unter Mitwirkung eines anodischen Katalysators oxidiert werden, wobei die anodische Halbzelle von einer kathodischen Halbzelle mit einer Kathode durch einen Separator getrennt ist, wobei die anodische Halbzelle einen anodischen Elektrolyt umfasst, welcher mit der Anode in Kontakt steht, und wobei die kathodische Halbzelle einen kathodischen Elektrolyt umfasst, welcher mit der Kathode in Kontakt steht.

Wasserstoff als Energieträger der Zukunft hat gegenüber fossilen Energieträgern den Vorteil, dass bei seiner Verbrennung als Reaktionsprodukt lediglich Wasser entsteht und eben kein Kohlenstoffdioxid.

Zur Gewinnung von Wasserstoff ist es bekannt, Elektrolyseure einzusetzen. Bei der Elektrolyse werden Wassermoleküle in molekularem Wasserstoff und molekularem Sauerstoff aufgespalten. Insbesondere kann hier elektrische Energie eingesetzt werden, die aus erneuerbaren oder regenerativen Energien als Energieträger erzeugt wird. Dadurch kann das Entstehen von Kohlenstoffdioxid komplett vermieden werden.

Bekannte Elektrolyseure haben jedoch auch Nachteile. Entweder sind sie ineffizient oder sehr teuer oder haben einen komplexen Aufbau. Dies liegt zum einen daran, dass in sauren Elektrolyten Edelmetall-Katalysatoren eingesetzt werden müssen, um das Wasser aufzuspalten.

Ein weiteres Problem sind die eingesetzten Elektrolyte. In derzeit bekannten kommerziellen Systemen müssen die Elektrolyte entweder hockalkalisch sein oder aus hochreinem Wasser bestehen. Alkalische Elektrolyte mit einem hohen pH-Wert werden durch Zugabe von Kaliumhydroxid in Wasser erreicht. Kaliumhydroxid herzustellen ist jedoch ein energieintensiver Prozess. Zudem ist Kaliumhydroxid hochgradig korrosiv. Außerdem werden bei der Elektrolyse in alkalischem Milieu Hydroxidionen verbraucht, so dass ständig alkalischer Elektrolyt zugegeben werden muss. Reines Wasser verhindert zwar die Vergiftung der Katalysatoren, weist jedoch nur eine sehr geringe Leitfähigkeit auf.

Ein derzeit sich entwickelndes Gebiet ist die Anionenmembran-Elektrolyse. Es wird intensiv an der Leistungseffizienz, der Membran, der Stabilität der Katalysatoren, der einfachen Handhabbarkeit sowie insbesondere der Reduzierung der Kosten der Elektrolysezellen gearbeitet.

Ein Problem bei der Anionenaustauschmembran-Elektrolyse ist die Wasserspaltung selbst. Die Wasserspaltung wird dabei erreicht unter Anlegen eines theoretischen Potentials von 1,23 V. Dieses Potential ist die Differenz des Potentials der Wasserstoffentwicklung, die -0,828 V beträgt, und der Sauerstoffentwicklung an der Anode, deren Potential 0,401 V beträgt. Da es sich dabei jedoch um theoretische Werte handelt und zudem der Katalysator das tatsächlich benötigte Potential vorgibt, bei dem die Reaktionen an der Anode und der Kathode ablaufen können, ist das tatsächlich erforderliche Zellpotential sehr viel höher.

Typischerweise liegen Zellenpotentiale von Anionenaustauschmembran-Elektrolyseuren im Bereich zwischen 1,85 V und 2,05 V. Im Gegensatz zur Anionenaustauschmembran-Elektrolyse in saurem Medium ist die Wasserstoffentwicklungsreaktion (HER - Hydrogen Evolution Reaction) der limitierende Schritt für die Anionenaustauschmembran-Elektrolyse in alkalischen Medien. Bis zum heutigen Tag sind basieren zudem alle effizienten Katalysatorsysteme in Anionenaustauschmembran-Elektrolyseuren auf Edelmetall-Katalysatoren - auch wenn dies theoretisch in alkalischen Medien nicht erforderlich ist und deutlich kostengünstigere Materialen wie beispielsweise Nickel verwendet werden können. Dieser besondere Aspekt ist jedoch durch die Art Anionenaustauschmembran und die Wechselwirkung zwischen Membran und Katalysator verursacht. Daher muss insbesondere der Katalysator für die Wasserstoffentwicklungsreaktion weiter verbessert werden, da dieser die Reaktion durch Umsetzen von Wasser in Wasserstoff und Hydroxidionen, die durch die Anionenaustauschmembran in die anodische Halbzelle wandern, wo sie oxidiert werden und molekularen Sauerstoff bilden, startet.

Ferner ist es bei bekannten Anionenaustauschmembran-Elektrolyseuren erforderlich, eine Anionenaustauschmembran einzusetzen, die beidseitig mit einem Katalysator beschichtet ist, um hinreichend gut zu funktionieren. Allerdings ist die Herstellung beidseitig beschichteter Anionenaustauschmembranen aufgrund des hygroskopischen Verhaltens der Membran und ihrer Neigung, bei Kontakt mit feuchten Agenzien zu schrumpfen, schwierig. Daher muss diese sogenannte "Catalyst Coated Membrane" (CCM), also die beidseitig mit Katalysatoren beschichtete Membran, in zwei Schritten und in einem ziemlich komplizierten Prozess hergestellt werden.

Bislang gibt es keine Lösungen der genannten Probleme, um die Anionenaustauschmembran-Elektrolyse wirtschaftlich sinnvoll nutzen zu können.

Es ist daher eine Aufgabe der vorliegenden Erfindung, einen Elektrolyseur sowie ein Verfahren der eingangs beschriebenen Art zu verbessern.

Die Aufgabe wird bei einem Elektrolyseur der eingangs beschriebenen Art erfindungsgemäß dadurch gelöst, dass die kathodische Halbzelle zur Erzeugung mindestens eines Mediator-Komplexes mindestens einen Kationen-Komplex enthält, dass der mindestens eine Kationen-Komplex durch Aufnahme mindestens eines Elektrons an der Kathode zum Mediator-Komplex reduzierbar ist und dass der Mediator-Komplex ein katalytisch aktiver chemischer Komplex zum Aufspalten des molekularen Wassers (H₂O) in molekularen Wasserstoff (H₂) und Hydroxidionen (OH⁻) unter Abgabe mindestens eines Elektrons ist.

Die vorgeschlagene Weiterbildung weist diverse Vorteile auf. Durch die quasi ein Redox-Paar bildende Kombination des Kationen-Komplexes und des korrespondierenden Mediator-Komplexes kann eine effiziente Aufspaltung von Wasser in molekularen Wasserstoff und Hydroxidionen in der anodischen Halbzelle erreicht werden. Ein Vorteil dabei ist eine deutlich verbesserte Reaktionskinetik und damit einhergehend eine Verringerung des Energiebedarfs, und zwar durch Verringerung des benötigten Potentials für die Wasserstoffentwicklung. Ferner wird die Herstellung der katalysatorbeschichteten Membran vereinfacht, da sie nun nur noch auf ihrer der Anode zugewandten Seite mit einem Katalysator beschichtet werden muss und nicht auf beiden Seiten. Das vorgeschlagene System ermöglicht zudem die Elektrolyse unter hohen Drücken, insbesondere bis zu etwa 60 bar Wasserstoffdruck, so dass der erzeugte Wasserstoff bereits vorkomprimiert ist und somit eine nachfolgende Komprimierung vereinfacht und damit kostengünstig wird. Zudem ist das System kostengünstig, da kein teurer Katalysator wie beispielsweise Edelmetalle, insbesondere Platin, benötigt werden. Zudem werden auch keine komplexen Katalysatorschichten auf der Kathodenseite der Anionenaustauschmembran für die Wasserstoffentwicklungsreaktion benötigt. Ein weiterer Vorteil des Systems ist seine Langlebigkeit. Der Aufbau der kathodischen Halbzelle ist deutlich vereinfacht und nur wenig durch Zersetzungsprozesse beeinträchtigt. Der Einsatz des Mediator-Komplexes ermöglicht es insbesondere, die erforderliche Zellspannung zur Elektrolyse von Wasser zu verringern. Da die Zellspannung direkt proportional zur erforderlichen Energie zur Spaltung von Wasser ist, kann so der Energieeinsatz signifikant verringert werden, wodurch sich Betriebskosten des Elektrolyseurs, nämlich insbesondere die Kosten für die Bereitstellung elektrischer Energie zur Elektrolyse, signifikant verringern lassen.

Vorzugsweise ist der mindestens eine Kationen-Komplex an katalytisch inaktiver oder im Wesentlichen inaktiver chemischer Komplex. Auf diese Weise kann eine sehr stabile kathodische Halbzelle ausgebildet werden. Katalytisch aktiv ist der Mediator-Komplex, der durch Elektronenaufnahme des Kationen-Komplexes gebildet wird.

Besonders gute Reaktionskinetiken, also schnelle Umsetzungen, sind möglich, wenn der Kationen-Komplex und der Mediator-Komplex im kathodischen Elektrolyt gelöst sind. Dies ermöglicht insbesondere eine schnelle Elektronenaufnahme des Kationen-Komplexes und eine schnelle Elektronenabgabe des Mediator-Komplexes.

Günstig ist es, wenn der mindestens eine Kationen-Komplex gebildet ist durch mindestens ein erstes Zentralteilchen und mindestens einen ersten Liganden, welcher das mindestens eine erste Zentralteilchen umgibt, wenn der Mediator-Komplex gebildet ist durch mindestens ein zweites Zentralteilchen und mindestens einen zweiten Liganden, welcher das mindestens eine Zentralteilchen umgibt, wenn das mindestens eine erste Zentralteilchen und das mindestens eine zweite Zentralteilchen ein Redox-Paar bilden derart, dass das erste Zentralteilchen durch Aufnahme mindestens eines Elektrons zum zweiten Zentralteilchen reduzierbar ist und wenn das mindestens eine zweite Zentralteilchen durch Abgabe mindestens eines Elektrons zum ersten Zentralteilchen oxidierbar ist. Mit anderen Worten werden die Zentralteilchen des Kationen-Komplexes und des Mediator-Komplexes durch ein Ionen-Paar gebildet, das ein Redox-Paar definiert. Ein solches Redox-Paar bilden beispielsweise Vanadiumionen V²⁺ und V³⁺. Zur Komplexbildung wird lediglich ein wasserlösbarer Ligand benötigt, der die das Redox-Paar bildenden Ionen umgibt.

Günstig ist es, wenn das das mindestens eine erste Zentralteilchen ein um mindestens eine Oxidationsstufe reduzierbares Kation ist und wenn das mindestens eine zweite Zentralteilchen das um die mindestens eine Oxidationsstufe reduzierte Kation ist. Dies ermöglicht es insbesondere, dass der Kationen-Komplex mit dem reduzierbaren Kation an der Kathode ein oder mehrere Elektronen aufnehmen kann, um den Mediator-Komplex mit dem reduzierten Kation zu bilden. Ist das Redoxpotential des reduzierbaren Kationen-Komplexes geringer als das Redoxpotential der Wasserstoffentwicklungsreaktion, kann so die Zellspannung insgesamt erniedrigt werden.

Besonders kostengünstig und stabil lässt sich der Elektrolyseur ausbilden, wenn das reduzierbare Kation und das reduzierte Kation Ionen unterschiedlicher Oxidationsstufen desselben Metalls sind.

Besonders effiziente Wasserelektrolyseure lassen sich ausbilden, wenn das Metall ein Metall aus der Gruppe der Übergangsmetalle ist. Insbesondere kann es ein Metall aus der Gruppe der Lanthanoiden sein.

Vorzugsweise ist das Übergangsmetall Ruthenium (Ru), Chrom (Cr), Vanadium (V), Mangan (Mn), Rhodium (Rh), Cobalt (Co) oder Eisen (Fe). Diese Übergangsmetalle können leicht Ionen in unterschiedlichen Oxidationsstufen bilden.

Vorzugsweise ist das Lanthanoid Europium (Eu) oder Cer (Ce).

Auf besonders einfache Weise lässt sich eine hocheffiziente kathodische Halbzelle ausbilden, wenn der Kationen-Komplex gebildet ist durch ein einziges erstes Zentralteilchen und/oder wenn der Mediator-Komplex gebildet ist durch ein einziges zweites Zentralteilchen. So lassen sich insbesondere sehr einfache Systeme realisieren.

Günstig ist es, wenn das einzige erste Zentralteilchen des Kationen-Komplexes von mindestens drei ersten Liganden umgeben ist und/oder wenn der Mediator-Komplex von mindestens drei zweiten Liganden umgeben ist. So lassen sich insbesondere besonders stabile Komplexe ausbilden.

Weiter vereinfachen lässt sich der Aufbau der kathodischen Halbzelle, wenn der mindestens eine erste Ligand und der mindestens eine zweite Ligand identisch sind. Beispielsweise können identische Komplexbildner, die den ersten und zweiten Liganden bilden, also diejenigen Teilchen, die die Zentralteilchen umgeben, vorgesehen sein.

Insbesondere eine Reaktionskinetik lässt sich dadurch verbessern, dass der mindestens eine erste Ligand und/oder der mindestens eine zweite Ligand in Form eines Komplexbildners ausgebildet sein. Derartige Liganden bilden eine optimale Ausbildung der Komplexe des Systems, wodurch eine schnelle Elektronenaufnahme durch den Kationen-Komplex sowie eine schnelle Elektronenabgabe durch den Mediator-Komplex ermöglicht wird.

Vorzugsweise ist der Komplexbildner in Form eines komplexbildenden Moleküls ausgebildet. Derartige komplexbildende Moleküle können beispielsweise gut lösbar sein, insbesondere im Wasser.

Besonders stabile und kostengünstiges kathodische Halbzellen von Anionenaustauschmembran-Elektrolyseuren lassen sich ausbilden, wenn der mindestens eine erste Ligand und/oder der mindestens eine zweite Ligand Mercaptoessigsäure, 2-Mercaptopropionsäure, Cysteamin, Cystein, Cysteinmethylester oder Brenzcatechin ist oder enthält.

Der Elektrolyseur lässt sich auf einfache Weise herstellen, wenn das mindestens eine erste Zentralteilchen in den kathodischen Elektrolyt durch Lösen eines Salzes, das das mindestens eine erste Zentralteilchen enthält, eingebracht ist. Beispielsweise können V³⁺-Ionen durch Lösen von Vanadium (III)-Chlorid im Wasser gebildet werden.

Ferner ist es günstig, wenn der mindestens eine erste Ligand und/oder der mindestens eine zweite Ligand in den kathodischen Elektrolyt durch Lösen eingebracht ist. Dies vereinfacht die Ausbildung der kathodischen Halbzelle. Zudem kann sich der Kationen-Komplex auf einfache Weise ausbilden, wenn sowohl das mindestens eine erste Zentralteilchen als auch der mindestens eine erste Ligand und/oder der mindestens eine zweite Ligand im kathodischen Elektrolyt gelöst sind.

Der Aufbau des Elektrolyseurs lässt sich weiter vereinfachen, wenn der Separator in Form einen Anionenaustauschmembran ausgebildet ist. Eine solche Membran kann ausschließlich von Anionen durchdrungen werden, nicht jedoch von Kationen, die die Zentralteilchen des Kationen-Komplexes und des Mediator-Komplexes bilden.

Günstig ist es wenn die Anionenaustauschmembran für Hydroxidionen permeabel ausgebildet ist. Die in der kathodischen Halbzelle bei der Spaltung von Wasser entstehenden Hydroxidionen können so in die anodische Halbzelle wandern und dort zu molekularem Sauerstoff oxidiert werden unter Abgabe von Elektronen und Ausbildung von Wasser.

Vorteilhaft ist es, wenn der kathodische Elektrolyt Wasser oder eine wässrige Lösung ist und/oder wenn der anodische Elektrolyt Wasser oder eine wässrige Lösung ist. So kann insbesondere ein kostengünstiger Elektrolyseur ausgebildet werden. Insbesondere kann in wässrigen Lösungen ein pH-Wert in gewünschter Weise eingestellt werden.

Günstigerweise weist der anodische Elektrolyt einen pH-Wert von mindestens etwa 7 auf. Vorzugsweise ist der pH-Wert des anodischen Elektrolyts mindestens etwa 9. In einem solchem alkalischen Milieu läuft die Sauerstoffentwicklungsreaktion vorteilhaft ab.

Vorzugsweise weist der kathodische Elektrolyt einen pH-Wert in einem Bereich von 0 bis etwa 9 auf. Bei einem solchen pH-Wert wird die Komplexbildung des Kationen-Komplexes unterstützt. Zudem können beispielsweise auch Protonen von den Liganden bei der Komplexbildung abgespalten werden und dazu beitragen, den kathodischen Elektrolyt saurer zu machen.

Günstig ist es, wenn sich ein pH-Wert des anodischen Elektrolyts und ein pH-Wert des kathodischen Elektrolyts unterscheiden und einen pH-Gradient definieren. Dies ermöglicht es insbesondere, in der kathodischen Halbzelle und in der anodischen Halbzelle unterschiedliche Milieus zu realisieren, beispielsweise ein saures Milieu in der kathodischen Halbzelle und ein alkalisches Milieu in der anodischen Halbzelle. Möglich sind insbesondere auch ein saures Milieu in der kathodischen Halbzelle und ein neutraler pH-Wert der anodischen Halbzelle oder ein alkalischer pH-Wert in der anodischen Halbzelle und ein neutraler pH-Wert in der kathodischen Halbzelle. Durch unterschiedliche pH-Werte des anodischen Elektrolyts und des kathodischen Elektrolyts können insbesondere sowohl in der kathodischen Halbzelle als auch in der anodischen Halbzelle kostengünstige Katalysatoren eingesetzt werden. Auf Edelmetall-Katalysatoren kann so verzichtet werden.

Vorteilhaft ist es, wenn der der pH-Gradient mindestens 1 beträgt. Insbesondere kann er mindestens 3 betragen. Weiter kann er insbesondere mindestens 5 betragen. Der pH-Gradient wird vorzugsweise so eingestellt, dass sowohl in der anodischen als auch in der kathodischen Halbzelle die gewünschten Katalysatoren eingesetzt werden können.

Um den pH-Wert in der kathodischen Halbzelle auf einem gewünschten Wert zu halten, ist es günstig, wenn die kathodische Halbzelle eine pH-Wert-Regulator enthält.

Vorzugsweise ist oder enthält der pH-Wert-Regulator Salzsäure (HCl), Schwefelsäure (H₂SO₄), Essigsäure, Phosphorsäure und/oder einen Phosphorsäure-Puffer. Die genannten Säuren beziehungsweise Puffer sind hervorragend geeignet, um einen pH-Wert in der kathodischen Halbzelle auf einem gewünschten Wert zu halten.

Auf einfache Weise lässt sich der Elektrolyseur ausbilden, wenn die Anode aus dem anodischen Katalysator besteht oder aus dem anodischen Katalysator ausgebildet ist oder den anodischen Katalysator enthält oder mit dem anodischen Katalysator beschichtet ist oder mit dem anodischen Katalysator elektrisch leitend in Kontakt steht. Diese Ausgestaltungen ermöglichen eine effiziente Sauerstoffentwicklungsreaktion in der anodischen Halbzelle.

Besonders einfach und kompakt lässt sich der Elektrolyseur ausbilden, wenn der Separator mit dem anodischen Katalysator beschichtet ist oder mit dem anodischen Katalysator elektrisch leitend in Kontakt steht. So kann beispielsweise eine mit dem anodischen Katalysator einseitig beschichtete Anionenaustauschmembran als Separator des Elektrolyseurs eingesetzt werden.

Auf einfache Weise lässt sich die Anode ausbilden, wenn sie massiv oder netzförmig ausgebildet ist.

Vorteilhaft ist es, wenn der anodische Katalysator Nickel, Iridium oder Cobalt ist oder Nickel, Iridium und/oder Cobalt enthält. Insbesondere kann der anodische Katalysator NiOₓ, NiCeOₓ, NiCoOₓ, NiCuOₓ, NiFeOₓ, NiLaOₓ, IrOₓ, CoFeOₓ oder CoOₓ sein oder enthalten.

Auf besonders einfache und kostengünstige Weise lässt sich der Elektrolyseur ausbilden, wenn die Kathode aus Kohlenstoff oder Edelstahl ausgebildet ist. Insbesondere ist es nicht erforderlich, die Kathode mit einem Katalysator zu beschichten. Kathoden aus Kohlenstoff oder Edelstahl lassen sich insbesondere kostengünstig herstellen.

Die eingangs gestellte Aufgabe wird ferner bei einem Verfahren der eingangs beschriebenen Art erfindungsgemäß dadurch gelöst, dass das molekulare Wasser (H₂O) in der kathodischen Halbzelle unter Mitwirkung mindestens eines Mediator-Komplexes in molekularen Wasserstoff (H₂) und Hydroxidionen (OH⁻) aufgespalten werden, dass in der kathodischen Halbzelle der mindestens eine Mediator-Komplex aus mindestens einem Kationen-Komplex gebildet wird, dass der Mediator-Komplex ein katalytisch aktiver chemischer Komplex zum Aufspalten des molekularen Wassers (H₂O) in molekularen Wasserstoff (H₂) und Hydroxidionen (OH⁻) unter Abgabe mindestens eines Elektrons ist und dass der mindestens eine Kationen-Komplex durch Aufnahme mindestens eines Elektrons an der Kathode zum Mediator-Komplex reduziert wird.

Wie bereits oben beschrieben kann so ein elektrochemischer Prozess, nämlich die Umwandlung des reduzierbaren Kationen-Komplexes in den Mediator-Komplex durch Elektronenaufnahme, mit einem chemischen Prozess, nämlich der Wasserstoffentwicklung in Anwesenheit des Mediator-Komplexes durch Elektronenaufnahme vom Mediator-Komplex, kombiniert werden. So lässt sich insbesondere eine Zellspannung des Elektrolyseurs gegenüber herkömmlichen Elektrolyseuren mit Edelmetallkatalysatoren sowohl insbesondere in der kathodischen Halbzelle signifikant reduzieren. Dadurch lassen sich insbesondere zum einen Betriebskosten senken, da eine geringere Zellspannung direkt mit einer geringeren elektrischen Leistungsaufnahme des Elektrolyseurs verknüpft ist, sowie auch Investitionskosten, da insbesondere auch kostengünstige Katalysatoren sowohl in der anodischen Halbzelle als auch in der kathodischen Halbzelle eingesetzt werden können.

Günstigerweise wird als der mindestens eine Kationen-Komplex ein katalytisch inaktiver oder im Wesentlichen inaktiver chemischer Komplex eingesetzt. Dies hat insbesondere den Vorteil, dass ein solcher Kationen-Komplex durch Lösen des mindestens einen ersten Zentralteilchens und des mindestens einen ersten Liganden im kathodischen Elektrolyt ausgebildet werden kann. Zudem kann so eine besonders stabile kathodische Halbzelle realisiert werden.

Auf einfache Weise lässt sich die kathodische Halbzelle ausbilden, wenn der Kationen-Komplex und der Mediator-Komplex in kathodischem Elektrolyt gelöst werden.

Gemäß der Erfindung ist es vorteilhaft, wenn der mindestens eine Kationen-Komplex gebildet wird durch mindestens ein erstes Zentralteilchen und mindestens einen ersten Liganden, welcher das mindestens eine erste Zentralteilchen umgibt, wenn der Mediator-Komplex gebildet wird durch mindestens ein zweites Zentralteilchen und mindestens einen zweiten Liganden, welcher das mindestens eine zweite Zentralteilchen umgibt, wenn das mindestens eine erste Zentralteilchen und das mindestens eine zweite Zentralteilchen ein Redox-Paar bilden derart, dass das erste Zentralteilchen durch Aufnahme mindestens eines Elektrons zum zweiten Zentralteilchen reduziert wird und dass das mindestens eine zweite Zentralteilchen durch Abgabe mindestens eines Elektrons zum ersten Zentralteilchen oxidiert wird. Das Verfahren auf diese Weise weiterzubilden ermöglicht es insbesondere, mit dem Kationen-Komplex Elektronen an der Kathode aufzunehmen und direkt als katalytisch aktiver Mediator-Komplex die Wasserspaltung unter Elektronenabgabe zu unterstützen.

Vorzugsweise wird als das mindestens eine erste Zentralteilchen ein durch Elektronenaufnahme an der Kathode um mindestens eine Oxidationsstufe reduzierbares Kation eingesetzt wird und wenn das mindestens eine zweite Zentralteilchen das um die mindestens eine Oxidationsstufe reduzierte Kation ist. Das reduzierbare Kation kann so mindestens ein, insbesondere auch zwei oder mehr Elektronen von der Kathode aufnehmen und diese dann als Zentralteilchen des katalytisch aktiven Mediator-Komplexes abgeben zur direkten Ausbildung von molekularem Wasserstoff und Hydroxidionen. Das reduzierbare Kation dient so als Zentralteilchen des Kationen-Komplexes als Elektronenüberträger, sodass die Wasserstoffentwicklungsreaktion nicht nur an der Kathode stattfinden kann, wie dies bei herkömmlichen Elektrolyseuren der Fall ist, sondern überall in der kathodischen Halbzelle.

Besonders einfach lässt sich das Verfahren durchführen, wenn als das reduzierbare Kation und das reduzierte Kation Ionen unterschiedlicher Oxidationsstufen desselben Metalls eingesetzt werden.

Günstig ist es, wenn als Metall ein Metall aus der Gruppe der Übergangsmetalle eingesetzt wird, insbesondere aus der Gruppe der Lanthanoiden. Diese bilden auf einfache Weise Redox-Paare aus, nämlich beispielsweise V²⁺/V³⁺, Cr²⁺/Cr³⁺ beziehungsweise Fe²⁺/Fe³⁺.

Vorzugsweise wird als Übergangsmetall Ruthenium (Ru), Chrom (Cr), Vanadium (V), Mangan (Mn), Rhodium (Rh), Cobalt (Co) oder Eisen (Fe) eingesetzt.

Günstigerweise wird als das Lanthanoid Europium (Eu) oder Cer (Ce) eingesetzt.

Ein besonderes einfaches System in der kathodischen Halbzelle kann ausgebildet werden, wenn der Kationen-Komplex gebildet wird durch ein einziges erstes Zentralteilchen und/oder wenn der Mediator-Komplex gebildet wird durch ein einziges zweites Zentralteilchen.

Besonders stabile Komplexe können insbesondere dadurch ausgebildet werden, dass das einzige erste Zentralteilchen des Kationen-Komplexes von mindestens drei ersten Liganden umgeben wird und/oder dass der Mediator-Komplex von mindestens drei zweiten Liganden umgeben wird.

Das Verfahren lässt sich weiter vereinfachen, wenn der mindestens eine erste Ligand und der mindestens eine zweite Ligand identisch eingesetzt werden. Beispielsweise kann eine einzige Form eines Komplexbildners eingesetzt werden, um sowohl den Kationen-Komplex als auch den Mediator-Komplex mit dem Redox-Paar als den Zentralteilchen der Komplexe zu bilden.

Sowohl der Kationen-Komplex als auch der Mediator-Komplex lassen sich auf einfache Weise erzeugen, wenn der mindestens eine erste Ligand und/oder der mindestens eine zweite Ligand in Form eines Komplexbildners ausgebildet werden.

Vorzugsweise wird der Komplexbildner in Form eines komplexbildenden Moleküls ausgebildet. Derartige komplexbildende Moleküle können beispielsweise gut lösbar sein, insbesondere in Wasser.

Einfache und kostengünstige Verfahren lassen sich durchführen, wenn als der mindestens eine erste Ligand und/oder der mindestens eine zweite Ligand Mercaptoessigsäure, 2-Mercaptopropionsäure, Cysteamin, Cystein, Cysteinmethylester oder Brenzcatechin eingesetzt wird.

Günstig ist es, wenn das das mindestens eine erste Zentralteilchen in den kathodischen Elektrolyt durch Lösen eines Salzes eingebracht wird. Insbesondere kann es sich dabei um ein Übergangsmetall-Salz handeln. Beispielsweise kann es sich um ein Vanadium-Salzes oder ein Chrom-Salz oder ein Eisen-Salz handeln. Insbesondere kann so eine Konzentration des reduzierbaren Kations in der kathodischen Halbzelle auf einfache Weise eingestellt werden.

Vorzugsweise wird der mindestens eine erste Ligand und/oder der mindestens eine zweite Ligand in den kathodischen Elektrolyt durch Lösen eingebracht. Dies ermöglicht eine einfache Durchführung des Verfahrens.

Vorteilhaft ist es, wenn der Separator in Form einer Anionenaustauschmembran ausgebildet wird. Ein solcher Separator lässt lediglich Anionen aus der kathodischen Halbzelle in die anodische Halbzelle wandern, jedoch keine Protonen in umgekehrter Richtung. Dies ermöglicht eine optimale Steuerung der Wasserspaltung.

Günstigerweise wird die Anionenaustauschmembran für Hydroxidionen permeabel ausgebildet. Die bei der Wasserspaltung in der kathodischen Halbzelle gebildeten Hydroxidionen können so in die anodische Halbzelle wandern und dort zu molekularem Sauerstoff oxidiert werden.

Einfach handhabbar und kostengünstig ausbilden lässt sich ein Elektrolyseur, wenn als der kathodische Elektrolyt Wasser oder eine wässrige Lösung eingesetzt wird und/oder wenn als der anodische Elektrolyt Wasser oder eine wässrige Lösung eingesetzt wird. Insbesondere lassen sich pH-Werte wässriger Lösungen auf einfache Weise auf einen gewünschten Wert einstellen.

Günstig ist es, wenn der anodische Elektrolyt mit einem pH-Wert von mindestens etwa 7 eingesetzt wird, insbesondere von mindestens etwa 9. So kann ein basisches Milieu in der anodischen Halbzelle erzeugt werden, um die Sauerstoffentwicklungsreaktion zu unterstützen.

Um die Wasserstoffentwicklungsreaktion zu unterstützen ist es vorteilhaft, wenn der kathodische Elektrolyt mit einem pH-Wert in einem Bereich von 0 bis etwa 9 eingesetzt wird.

Um die Wasserstoffentwicklungsreaktion in der kathodischen Halbzelle und die Sauerstoffentwicklungsreaktion in der anodischen Halbzelle zu optimieren, ist es günstig, wenn ein anodischer Elektrolyt und ein kathodischer Elektrolyt mit sich unterscheidenden pH-Werten eingesetzt werden und einen pH-Gradient definieren. Insbesondere ermöglicht es dies, kathodische und anodische Katalysatoren einzusetzen, die die Wasserstoffentwicklungsreaktion beziehungsweise die Sauerstoffentwicklungsreaktion optimal unterstützen. Zudem können Katalysatoren eingesetzt werden, bei denen es sich nicht um Edelmetalle handelt. So lassen sich insbesondere Investitionskosten zur Ausbildung von Elektrolyseuren minimieren.

Vorteilhaft ist es, wenn anodische und kathodische Elektrolyten eingesetzt werden, so dass der pH-Gradient mindestens 1 beträgt. Insbesondere kann er mindestens 3 betragen. Weiter insbesondere kann der pH-Gradient mindestens 5 betragen. Der pH-Gradient wird vorzugsweise so gewählt oder eingestellt, dass die Wasserstoffentwicklungsreaktion und die Sauerstoffentwicklungsreaktion optimal ablaufen.

Vorteilhafterweise wird der kathodischen Halbzelle ein pH-Wert-Regulator zugegeben. So kann der pH-Wert in der kathodischen Halbzelle auf einem gewünschten Wert gehalten werden.

Auf einfache Weise lässt sich ein pH-Wert in der kathodischen Halbzelle regulieren, wenn als der pH-Wert-Regulator Salzsäure (HCl), Schwefelsäure (H₂SO₄), Essigsäure, Phosphorsäure und/oder ein Phosphorsäure-Puffer zugegeben wird.

Gemäß einer bevorzugten Ausführungsform der Erfindung kann vorgesehen sein, dass eine Anode ausgebildet wird derart, dass sie aus dem anodischen Katalysator besteht oder aus dem anodischen Katalysator ausgebildet ist oder den anodischen Katalysator enthält oder mit dem anodischen Katalysator beschichtet ist oder mit dem anodischen Katalysator elektrisch leitend in Kontakt steht. Die Anode derart auszubilden, kann insbesondere sicherstellen, dass die Sauerstoffentwicklungsreaktion in gewünschter Weise in der anodischen Halbzelle ablaufen kann.

Auf einfache Weise lässt sich eine Elektrolysezelle realisieren und damit ein erfindungsgemäßes Verfahren durchführen, wenn der Separator mit dem anodischen Katalysator beschichtet wird oder mit dem anodischen Katalysator elektrisch leitend in Kontakt gebracht wird. Insbesondere kann so eine einseitig katalytisch beschichtete Anionenaustauschmembran zur Durchführung des Verfahrens eingesetzt werden.

Günstig ist es, wenn die Anode massiv oder netzförmig ausgebildet wird. Dies ermöglicht es insbesondere, die Anode auf einfache Weise auszubilden.

Eine besonders effiziente Sauerstoffentwicklungsreaktion kann erreicht werden, wenn ein anodischer Katalysator eingesetzt wird, welcher Nickel, Iridium oder Cobalt ist oder Nickel, Iridium und/oder Cobalt enthält. Insbesondere kann der anodische Katalysator NiOₓ, NiCeOₓ, NiCoOₓ, NiCuOₓ, NiFeOₓ, NiLaOₓ, IrOₓ, CoFeOₓ oder CoOₓ sein oder enthalten.

Das Verfahren lässt sich auf kostengünstige Weise durchführen, wenn die Kathode aus Kohlenstoff oder Edelstahl ausgebildet wird.

Ferner wird die Verwendung eines der oben beschriebenen Elektrolyseure zur Durchführung eines der oben beschriebenen Verfahren vorgeschlagen. So lässt sich insbesondere Wasserstoff einfach und kostengünstig mit hoher Effizienz erzeugen.

Die vorstehende Beschreibung umfasst somit insbesondere die nachfolgend in Form durchnummerierter Sätze definierten Ausführungsformen von Elektrolyseuren und Verfahren zum Aufspalten von molekularem Wasser in molekularen Wasserstoff und molekularen Sauerstoff:
1. Elektrolyseur (110) zum Aufspalten von molekularem Wasser (112) in molekularen Wasserstoff (114) und molekularen Sauerstoff (116) unter Einsatz elektrischer Energie, welcher Elektrolyseur (110) eine anodische Halbzelle (122) mit einer Anode (140) und eine kathodische Halbzelle (124) mit einer Kathode (134) umfasst, wobei die anodische Halbzelle (122) und die kathodische Halbzelle (124) durch einen Separator (126) voneinander getrennt sind, wobei die anodische Halbzelle (122) einen anodischen Elektrolyt (128) umfasst, welcher mit der Anode (140) in Kontakt steht, und wobei die kathodische Halbzelle (124) einen kathodischen Elektrolyt (130) umfasst, welcher mit der Kathode (134) in Kontakt steht, wobei die anodische Halbzelle (122) einen anodischen Katalysator (144) umfasst, dadurch gekennzeichnet, dass die kathodische Halbzelle (124) zur Erzeugung mindestens eines Mediator-Komplexes (168) mindestens einen Kationen-Komplex (162) enthält, dass der mindestens eine Kationen-Komplex (162) durch Aufnahme mindestens eines Elektrons (152) an der Kathode zum Mediator-Komplex (168) reduzierbar ist und dass der Mediator-Komplex (168) ein katalytisch aktiver chemischer Komplex zum Aufspalten des molekularen Wassers (H₂O) (112) in molekularen Wasserstoff (H₂) (114) und Hydroxidionen (OH⁻) (174) unter Abgabe mindestens eines Elektrons (152) ist.
2. Elektrolyseur nach Satz 1, dadurch gekennzeichnet, dass der mindestens eine Kationen-Komplex (162) ein katalytisch inaktiver oder im Wesentlichen inaktiver chemischer Komplex ist.
3. Elektrolyseur nach einem der voranstehenden Sätze, dadurch gekennzeichnet, dass der Kationen-Komplex (162) und der Mediator-Komplex (168) im kathodischen Elektrolyt (130) gelöst sind.
4. Elektrolyseur nach einem der voranstehenden Sätze, dadurch gekennzeichnet, dass der mindestens eine Kationen-Komplex (162) gebildet ist durch mindestens ein erstes Zentralteilchen (164) und mindestens einen ersten Liganden (166), welcher das mindestens eine erste Zentralteilchen (164) umgibt, dass der Mediator-Komplex (168) gebildet ist durch mindestens ein zweites Zentralteilchen (170) und mindestens einen zweiten Liganden (172), welcher das mindestens eine zweite Zentralteilchen (170) umgibt, dass das mindestens eine erste Zentralteilchen (164) und das mindestens eine zweite Zentralteilchen (170) ein Redox-Paar bilden derart, dass das erste Zentralteilchen (164) durch Aufnahme mindestens eines Elektrons (152) zum zweiten Zentralteilchen (170) reduzierbar ist und dass das mindestens eine zweite Zentralteilchen (170) durch Abgabe mindestens eines Elektrons (152) zum ersten Zentralteilchen (164) oxidierbar ist.
5. Elektrolyseur nach Satz 4, dadurch gekennzeichnet, dass das mindestens eine erste Zentralteilchen (164) ein um mindestens eine Oxidationsstufe reduzierbares Kation (148) ist und dass das mindestens eine zweite Zentralteilchen (170) das um die mindestens eine Oxidationsstufe reduzierte Kation (154) ist.
6. Elektrolyseur nach Satz 5, dadurch gekennzeichnet, dass das reduzierbare Kation (148) und das reduzierte Kation (154) Ionen unterschiedlicher Oxidationsstufen desselben Metalls sind.
7. Elektrolyseur nach Satz 6, dadurch gekennzeichnet, dass das Metall ein Metall aus der Gruppe der Übergangsmetalle ist, insbesondere aus der Gruppe der Lanthanoiden.
8. Elektrolyseur nach Satz 7, dadurch gekennzeichnet, dass das Übergangsmetall Ruthenium (Ru), Chrom (Cr), Vanadium (V), Mangan (Mn), Rhodium (Rh), Cobalt (Co) oder Eisen (Fe) ist.
9. Elektrolyseur nach Satz 7 oder 8, dadurch gekennzeichnet, dass das Lanthanoid Europium (Eu) oder Cer (Ce) ist.
10. Elektrolyseur nach einem der Sätze 4 bis 9, dadurch gekennzeichnet, dass der Kationen-Komplex (162) gebildet ist durch ein einziges erstes Zentralteilchen (164) und/oder dass der Mediator-Komplex (168) gebildet ist durch ein einziges zweites Zentralteilchen (170).
11. Elektrolyseur nach Satz 10, dadurch gekennzeichnet, dass das einzige erste Zentralteilchen (164) des Kationen-Komplexes (162) von mindestens drei ersten Liganden (166) umgeben ist und/oder dass der Mediator-Komplex (168) von mindestens drei zweiten Liganden (172) umgeben ist.
12. Elektrolyseur nach einem der Sätze 4 bis 11, dadurch gekennzeichnet, dass der mindestens eine erste Ligand (166) und der mindestens eine zweite Ligand (172) identisch sind.
13. Elektrolyseur nach einem der Sätze 4 bis 12, dadurch gekennzeichnet, dass der mindestens eine erste Ligand (166) und/oder der mindestens eine zweite Ligand (172) in Form eines Komplexbildners (156) ausgebildet sind.
14. Elektrolyseur nach Satz 13, dadurch gekennzeichnet, dass der Komplexbildner (156) in Form eines komplexbildenden Moleküls (158) ausgebildet ist.
15. Elektrolyseur nach einem der Sätze 4 bis 14, dadurch gekennzeichnet, dass der mindestens eine erste Ligand (166) und/oder der mindestens eine zweite Ligand (172) Mercaptoessigsäure, 2-Mercaptopropionsäure, Cysteamin, Cystein, Cysteinmethylester oder Brenzcatechin ist oder enthält.
16. Elektrolyseur nach einem der Sätze 4 bis 15, dadurch gekennzeichnet, dass das mindestens eine erste Zentralteilchen (164) in den kathodischen Elektrolyt (130) durch Lösen eines Salzes, das das mindestens eine erste Zentralteilchen (164) enthält, eingebracht ist.
17. Elektrolyseur nach einem der Sätze 4 bis 16, dadurch gekennzeichnet, dass der mindestens eine erste Ligand (166) und/oder der mindestens eine zweite Ligand (172) in den kathodischen Elektrolyt (130) durch Lösen eingebracht ist.
18. Elektrolyseur nach einem der voranstehenden Sätze, dadurch gekennzeichnet, dass der Separator (126) in Form einer Anionenaustauschmembran (146) ausgebildet ist.
19. Elektrolyseur nach Satz 18, dadurch gekennzeichnet, dass die Anionenaustauschmembran (146) für Hydroxdionen (174) permeabel ausgebildet ist.
20. Elektrolyseur nach einem der voranstehenden Sätze, dadurch gekennzeichnet, dass der kathodische Elektrolyt (130) Wasser (112) oder eine wässrige Lösung ist und/oder dass der anodische Elektrolyt (138) Wasser (112) oder eine wässrige Lösung ist.
21. Elektrolyseur nach einem der voranstehenden Sätze, dadurch gekennzeichnet, dass der anodische Elektrolyt (128) einen pH-Wert von mindestens etwa 7 aufweist, insbesondere von mindestens etwa 9.
22. Elektrolyseur nach einem der voranstehenden Sätze, dadurch gekennzeichnet, dass der kathodische Elektrolyt (130) einen pH-Wert in einem Bereich von 0 bis etwa 9 aufweist.
23. Elektrolyseur nach einem der voranstehenden Sätze, dadurch gekennzeichnet, dass sich ein pH-Wert des anodischen Elektrolyts (128) und ein pH-Wert des kathodischen Elektrolyts (130) unterscheiden und einen pH-Gradient definieren.
24. Elektrolyseur nach Satz 23, dadurch gekennzeichnet, dass der pH-Gradient mindestens 1, insbesondere mindestens 3, weiter insbesondere mindestens 5, beträgt.
25. Elektrolyseur nach einem der voranstehenden Sätze, dadurch gekennzeichnet, dass die kathodische Halbzelle (124) einen pH-Wert-Regulator enthält.
26. Elektrolyseur nach Satz 25, dadurch gekennzeichnet, dass der pH-Wert-Regulator Salzsäure (HCl), Schwefelsäure (H₂SO₄), Essigsäure, Phosphorsäure und/oder ein Phosphorsäure-Puffer ist oder enthält.
27. Elektrolyseur nach einem der voranstehenden Sätze, dadurch gekennzeichnet, dass die Anode (140) aus dem anodischen Katalysator (144) besteht oder aus dem anodischen Katalysator (144) ausgebildet ist oder den anodischen Katalysator (144) enthält oder mit dem anodischen Katalysator (144) beschichtet ist oder mit dem anodischen Katalysator (144) elektrisch leitend in Kontakt steht.
28. Elektrolyseur nach einem der Sätze 1 bis 26, dadurch gekennzeichnet, dass der Separator (126) mit dem anodischen Katalysator (144) beschichtet ist oder mit dem anodischen Katalysator (144) elektrisch leitend in Kontakt steht.
29. Elektrolyseur nach einem der voranstehenden Sätze, dadurch gekennzeichnet, dass die Anode (140) massiv oder netzförmig ausgebildet ist.
30. Elektrolyseur nach einem der voranstehenden Sätze, dadurch gekennzeichnet, dass der anodische Katalysator (144) Nickel, Iridium oder Cobalt ist oder Nickel, Iridium und/oder Cobalt enthält, insbesondere in der Form NiOₓ, NiCeOₓ, NiCoOₓ, NiCuOₓ, NiFeOₓ, NiLaOₓ, IrOₓ, CoFeOₓ oder CoOₓ.
31. Elektrolyseur nach einem der voranstehenden Sätze, dadurch gekennzeichnet, dass die Kathode (134) aus Kohlenstoff oder Edelstahl ausgebildet.
32. Verfahren zum Aufspalten von molekularem Wasser (112) in molekularen Wasserstoff (114) und molekularen Sauerstoff (116) unter Einsatz elektrischer Energie, bei welchem Verfahren Hydroxidionen (174) in einer anodischen Halbzelle (122) mit einer Anode (140) unter Mitwirkung eines anodischen Katalysators (144) oxidiert werden, wobei die anodische Halbzelle (122) von einer kathodischen Halbzelle (124) mit einer Kathode (134) durch einen Separator (126) getrennt ist, wobei die anodische Halbzelle (122) einen anodischen Elektrolyt (128) umfasst, welcher mit der Anode (140) in Kontakt steht, und wobei die kathodische Halbzelle (124) einen kathodischen Elektrolyt (130) umfasst, welcher mit der Kathode (134) in Kontakt steht, dadurch gekennzeichnet, dass das molekulare Wasser (H₂O) (112) in der kathodischen Halbzelle (124) unter Mitwirkung mindestens eines Mediator-Komplexes (168) in molekularen Wasserstoff (H₂) (114) und Hydroxidionen (OH⁻) (174) aufgespalten werden, dass in der kathodischen Halbzelle (124) der mindestens eine Mediator-Komplex (168) aus mindestens einem Kationen-Komplex (162) gebildet wird, dass der Mediator-Komplex (168) ein katalytisch aktiver chemischer Komplex zum Aufspalten des molekularen Wassers (H₂O) (112) in molekularen Wasserstoff (H₂) (114= und Hydroxidionen (OH⁻) (174) unter Abgabe mindestens eines Elektrons (152) ist und dass der mindestens eine Kationen-Komplex (162) durch Aufnahme mindestens eines Elektrons (152) an der Kathode (134) zum Mediator-Komplex (168) reduziert wird.
33. Verfahren nach Satz 32, dadurch gekennzeichnet, dass als der mindestens eine Kationen-Komplex (162) ein katalytisch inaktiver oder im Wesentlichen inaktiver chemischer Komplex eingesetzt wird.
34. Verfahren nach Satz 32 oder 33, dadurch gekennzeichnet, dass der Kationen-Komplex (162) und der Mediator-Komplex (168) im kathodischen Elektrolyt (130) gelöst werden.
35. Verfahren nach einem der Sätze 32 bis 34, dadurch gekennzeichnet, dass der mindestens eine Kationen-Komplex (162) gebildet wird durch mindestens ein erstes Zentralteilchen (164) und mindestens einen ersten Liganden (166), welcher das mindestens eine erste Zentralteilchen (164) umgibt, dass der Mediator-Komplex (168) gebildet wird durch mindestens ein zweites Zentralteilchen (170) und mindestens einen zweiten Liganden (172), welcher das mindestens eine zweite Zentralteilchen (170) umgibt, dass das mindestens eine erste Zentralteilchen (164) und das mindestens eine zweite Zentralteilchen (170) ein Redox-Paar bilden derart, dass das erste Zentralteilchen (164) durch Aufnahme mindestens eines Elektrons (152) zum zweiten Zentralteilchen (170) reduziert wird und dass das mindestens eine zweite Zentralteilchen (170) durch Abgabe mindestens eines Elektrons (152) zum ersten Zentralteilchen (164) oxidiert wird.
36. Verfahren nach Satz 35, dadurch gekennzeichnet, dass als das mindestens eine erste Zentralteilchen (164) ein um mindestens eine Oxidationsstufe reduzierbares Kation (148) eingesetzt wird und dass das mindestens eine zweite Zentralteilchen (170) das um die mindestens eine Oxidationsstufe reduzierte Kation (154) ist.
37. Verfahren nach Satz 36, dadurch gekennzeichnet, dass als das reduzierbare Kation (148) und das reduzierte Kation (154) Ionen unterschiedlicher Oxidationsstufen desselben Metalls eingesetzt werden.
38. Verfahren nach Satz 37, dadurch gekennzeichnet, dass als das Metall ein Metall aus der Gruppe der Übergangsmetalle eingesetzt wird, insbesondere aus der Gruppe der Lanthanoiden.
39. Verfahren nach Satz 38, dadurch gekennzeichnet, dass als das Übergangsmetall Ruthenium (Ru), Chrom (Cr), Vanadium (V), Mangan (Mn), Rhodium (Rh), Cobalt (Co) oder Eisen (Fe) eingesetzt wird.
40. Verfahren nach Satz 38 oder 39, dadurch gekennzeichnet, dass als das Lanthanoid Europium (Eu) oder Cer (Ce) eingesetzt wird.
41. Verfahren nach einem der Sätze 35 bis 40, dadurch gekennzeichnet, dass der Kationen-Komplex (162) gebildet wird durch ein einziges erstes Zentralteilchen (164) und/oder dass der Mediator-Komplex (168) gebildet wird durch ein einziges zweites Zentralteilchen (170).
42. Verfahren nach Satz 41, dadurch gekennzeichnet, dass das einzige erste Zentralteilchen (164) des Kationen-Komplexes (162) von mindestens drei ersten Liganden (166) umgeben wird und/oder dass der Mediator-Komplex (168) von mindestens drei zweiten Liganden (172) umgeben wird.
43. Verfahren nach einem der Sätze 35 bis 42, dadurch gekennzeichnet, dass der mindestens eine erste Ligand (166) und der mindestens eine zweite Ligand (172) identisch eingesetzt werden.
44. Verfahren nach einem der Sätze 35 bis 43, dadurch gekennzeichnet, dass der mindestens eine erste Ligand (166) und/oder der mindestens eine zweite Ligand (172) in Form eines Komplexbildners (156) ausgebildet werden.
45. Verfahren nach Satz 44, dadurch gekennzeichnet, dass der Komplexbildner (156) in Form eines komplexbildenden Moleküls (158) ausgebildet wird.
46. Verfahren nach einem der Sätze 35 bis 45, dadurch gekennzeichnet, dass als der mindestens eine erste Ligand (166) und/oder der mindestens eine zweite Ligand (172) Mercaptoessigsäure, 2-Mercaptopropionsäure, Cysteamin, Cystein, Cysteinmethylester oder Brenzcatechin eingesetzt wird.
47. Verfahren nach einem der Sätze 35 bis 46, dadurch gekennzeichnet, dass das mindestens eine erste Zentralteilchen (164) in den kathodischen Elektrolyt (130) durch Lösen eines Salzes, das das mindestens eine erste Zentralteilchen (164) enthält, eingebracht wird.
48. Verfahren nach einem der Sätze 35 bis 37, dadurch gekennzeichnet, dass der mindestens eine erste Ligand (166) und/oder der mindestens eine zweite Ligand (172) in den kathodischen Elektrolyt (130) durch Lösen eingebracht wird.
49. Verfahren nach einem der Sätze 32 bis 48, dadurch gekennzeichnet, dass der Separator (126) in Form einer Anionenaustauschmembran (146) ausgebildet wird.
50. Verfahren nach Satz 49, dadurch gekennzeichnet, dass die Anionenaustauschmembran (146) für Hydroxidionen (174) permeabel ausgebildet wird.
51. Verfahren nach einem der Sätze 32 bis 50, dadurch gekennzeichnet, dass als der kathodische Elektrolyt (130) Wasser (112) oder eine wässrige Lösung ist und/oder dass der anodische Elektrolyt (128) Wasser (112) oder eine wässrige Lösung eingesetzt wird.
52. Verfahren nach einem der Sätze 32 bis 51, dadurch gekennzeichnet, dass der anodische Elektrolyt (128) mit einem pH-Wert von mindestens etwa 7 eingesetzt wird, insbesondere von mindestens etwa 9.
53. Verfahren nach einem der Sätze 32 bis 52, dadurch gekennzeichnet, dass der kathodische Elektrolyt (130) mit einem pH-Wert in einem Bereich von 0 bis etwa 9 eingesetzt wird.
54. Verfahren nach einem der Sätze 32 bis 53, dadurch gekennzeichnet, dass ein anodischer Elektrolyt (128) und ein kathodischer Elektrolyt (130) mit sich unterscheidenden pH-Werten eingesetzt werden und einen pH-Gradient definieren.
55. Verfahren nach Satz 54, dadurch gekennzeichnet, dass anodische und kathodische Elektrolyten (128, 130) eingesetzt werden, so dass der pH-Gradient mindestens 1, insbesondere mindestens 3, weiter insbesondere mindestens 5, beträgt.
56. Verfahren nach einem der Sätze 32 bis 55, dadurch gekennzeichnet, dass der kathodischen Halbzelle (124) ein pH-Wert-Regulator zugegeben wird.
57. Verfahren nach Satz 56, dadurch gekennzeichnet, dass als der pH-Wert-Regulator Salzsäure (HCl), Schwefelsäure (H₂SO₄), Essigsäure, Phosphorsäure und/oder ein Phosphorsäure-Puffer zugegeben wird.
58. Verfahren nach einem der Sätze 32 bis 57, dadurch gekennzeichnet, dass die Anode (140) ausgebildet wird derart, dass sie aus dem anodischen Katalysator (144) besteht oder aus dem anodischen Katalysator (144) ausgebildet ist oder den anodischen Katalysator (144) enthält oder mit dem anodischen Katalysator (144) beschichtet ist oder mit dem anodischen Katalysator (144) elektrisch leitend in Kontakt steht.
59. Verfahren nach einem der Sätze 32 bis 57, dadurch gekennzeichnet, dass der Separator (126) mit dem anodischen Katalysator (144) beschichtet wird oder mit dem anodischen Katalysator (144) elektrisch leitend in Kontakt gebracht wird.
60. Verfahren nach einem der Sätze 32 bis 59, dadurch gekennzeichnet, dass die Anode (140) massiv oder netzförmig ausgebildet wird.
61. Verfahren nach einem der Sätze 32 bis 60, dadurch gekennzeichnet, dass ein anodischer Katalysator (144) eingesetzt wird, welcher Nickel, Iridium oder Cobalt ist oder Nickel, Iridium und/oder Cobalt enthält, insbesondere in der Form NiOₓ, NiCeOₓ, NiCoOₓ, NiCuOₓ, NiFeOₓ, NiLaOₓ, IrOₓ, CoFeOₓ oder CoOₓ.
62. Verfahren nach einem der Sätze 32 bis 61, dadurch gekennzeichnet, dass die Kathode (134) aus Kohlenstoff oder Edelstahl ausgebildet wird.
63. Verwendung eines Elektrolyseurs (110) nach einem der Sätze 1 bis 31 zur Durchführung eines Verfahrens nach einem der Sätze 32 bis 62.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung des Aufbaus eines Ausführungsbeispiels eines Elektrolyseurs, wie er aus dem Stand der Technik bekannt ist;
- Figur 2:: eine schematische Darstellung Elektrodenpotentialdifferenz der Wasserspaltungsreaktion in saurem und alkalischem Medium;
- Figur 3:: eine schematische Darstellung eines Ausführungsbeispiels eines Elektrolyseurs gemäß der Erfindung;
- Figur 4:: eine schematische Darstellung eines Ausführungsbeispiels einer elektrochemischen Zelle gemäß der Erfindung;
- Figur 5:: eine Übersicht der Reaktionsgleichungen in der kathodischen Halbzelle (1), (2) und (3) sowie an der Anode (4);
- Figur 6:: eine schematische Darstellung eines Ausführungsbeispiels bei der Bildung des Kationen-Komplexes mit einem ersten Zentralteilchen und drei Liganden;
- Figur 7:: eine schematische Darstellung eines Ausführungsbeispiels bei der Umwandlung des Kationen-Komplexes in den MediatorKomplex durch Elektronenaufnahme; und
- Figur 8:: eine schematische Darstellung eines Ausführungsbeispiels bei der Spaltung von Wasser in molekularen Wasserstoff und Hydroxidionen durch Umwandlung des Mediator-Komplexes in den Kationen-Komplex unter Elektronenabgabe.

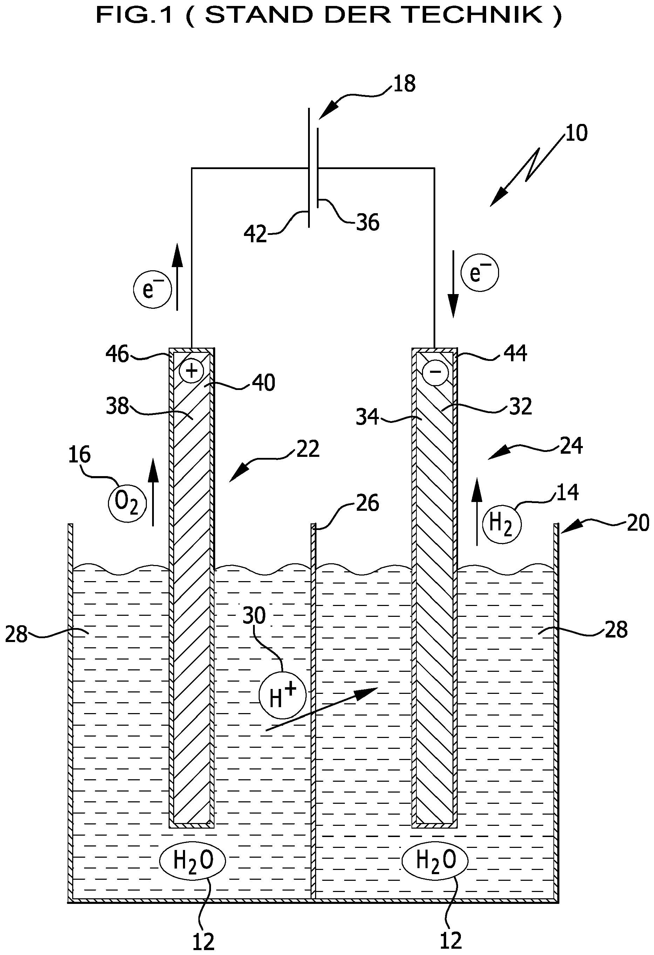

In Figur 1 ist ein Ausführungsbeispiel eines aus dem Stand der Technik bekannten Elektrolyseurs 10 zum Zerlegen von Wasser 12 in Wasserstoff 14 und Sauerstoff 16 unter Einsatz von elektrischer Energie, die durch Spannungsquelle 18 bereitgestellt wird, schematisch dargestellt.

Der Elektrolyseur 10 umfasst eine Elektrolysezelle 20, welche eine anodische Halbzelle 22 und eine kathodische Halbzelle 24 umfasst. Die beiden Halbzellen 22 und 24 sind durch einen Separator 26 voneinander getrennt.

Die beiden Halbzellen 22 und 24 sind mit einem Elektrolyt 28 befüllt. Ist der Separator 26 in Form einer Protonenaustauschmembran (PEM) ausgebildet, weist der Elektrolyt 28 einen pH-Wert im neutralen Bereich auf, definiert also ein neutrales Milieu, und zwar sowohl in der anodischen Halbzelle 22 als auch in der kathodischen Halbzelle 24. Die Protonenaustauschmembran ist ausschließlich für Protonen 30, also H⁺-Ionen, permeabel.

In die kathodische Halbzelle 24 taucht eine Elektrode 32 in Form einer Kathode 34 ein, die elektrisch leitend mit dem Minuspol 36 der Spannungsquelle 18 verbunden ist.

In die anodische Halbzelle 22 taucht eine Elektrode 38 in Form einer Anode 40 ein, die elektrisch leitend mit dem Pluspol 42 der Spannungsquelle 18 verbunden ist.

Bei dem in Figur 1 dargestellten Ausführungsbeispiel des Elektrolyseurs 10 ist die Kathode 34 aus einem elektrisch leitfähigen Material, zum Beispiel Edelstahl oder Kohlenstoff, ausgebildet, und mit einem kathodischen Katalysator 44 beschichtet. Bei dem kathodischen Katalysator 44 handelt es sich um Platin.

Die Anode 40 ist ebenfalls aus einem elektrisch leitfähigen Material ausgebildet, welches oxidationsbeständig sein muss, beispielsweise aus Titan, und mit einem anodischen Katalysator 46 beschichtet. Bei diesem handelt es sich um Iridium.

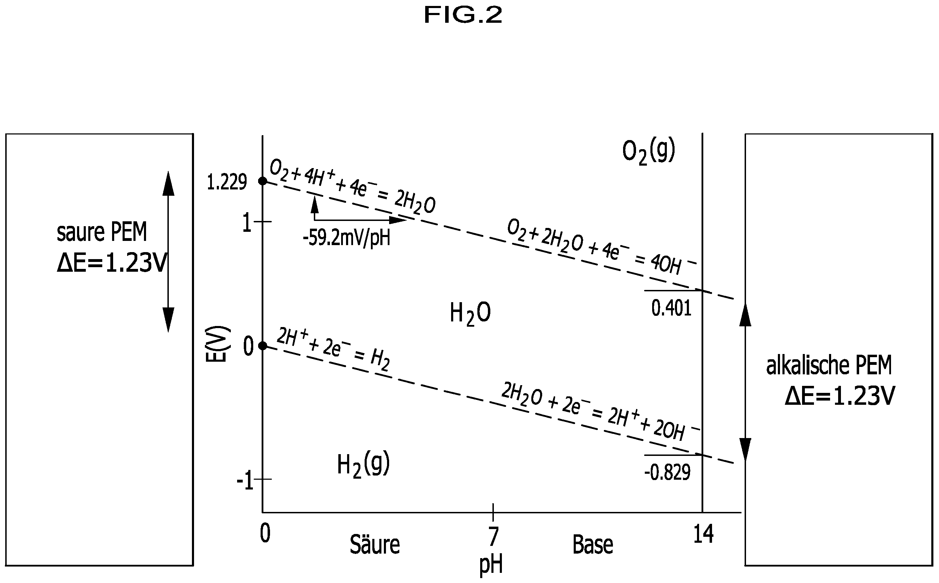

In Figur 2 sind die zugehörigen elektrochemischen Potentiale des Elektrolyseurs 10 schematisch dargestellt. Die erforderliche Zellspannung zur Zersetzung von Wasser 12 in Wasserstoff 14 und Sauerstoff 16 beträgt etwa 1,23 Volt. Weist der Elektrolyt 28 einen sauren pH-Wert auf, bewegen sich in der anodischen Halbzelle 22 erzeugte Protonen 30 durch den Separator 26 zur Kathode 34 hin und werden dort, unterstützt durch den kathodischen Katalysator 44, nach Aufnahme von Elektronen (e⁻) zu molekularem Wasserstoff 14 reduziert.

Die aus Wassermolekülen dissoziierten Hydroxidionen (OH⁻) bewegen sich zur Anode 40 hin und werden unter Abgabe von Elektronen in molekularen Sauerstoff 16 und Wasser 12 umgewandelt. Weist der Elektrolyt 28 einen neutralen pH Wert auf, entstehen in der anodischen Halbzelle 22 durch die Oxidation von Wasser 12 am anodischen Katalysator 46 molekularer Sauerstoff und Protonen 30. Die Protonen 30 bewegen sich aufgrund der gegensätzlichen Ladung durch den Separator 26 zur Kathode 34.

Ersetzt man den Separator 26 durch eine Anionenaustauschmembran, die für Hydroxidionen permeabel ist, und wählt einen alkalischen Elektrolyt 28, so bleibt die für die Elektrolyse erforderliche Zellspannung erhalten, wie sich dies schematisch aus Figur 2 ergibt.

Betreibt man den Elektrolyseur 10 im alkalischen Milieu können als anodischer Katalysator 46 Nickel und als anodische Katalysatoren 44 Cobalt und/oder Mangan eingesetzt werden. Der Nachteil eines alkalischen Elektrolyts 28 ist jedoch, dass ständig Hydroxidionen nachgeliefert werden müssen. Zudem sind stark alkalische Elektrolyten 28 hochgradig korrosiv.

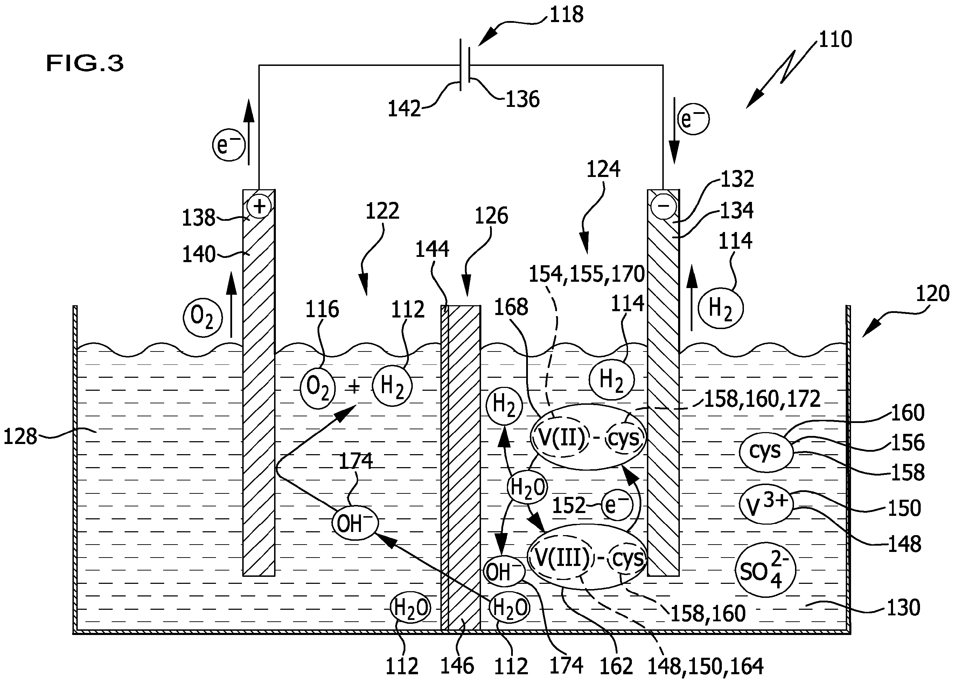

Figur 3 zeigt schematisch ein Ausführungsbeispiel eines Elektrolyseurs 110 gemäß der Erfindung. Auch er dient dazu, Wasser 112 in molekularen Wasserstoff 114 und molekularen Sauerstoff 116 zu zerlegen. Auch hierfür wird elektrische Energie eingesetzt, die durch eine Spannungsquelle 118 bereitgestellt wird.

Der Elektrolyseur 110 umfasst eine Elektrolysezelle 120 mit einer anodischen Halbzelle 122 und einer kathodischen Halbzelle 124. Die Halbzellen 122 und 124 sind durch einen Separator 126 voneinander getrennt.

Die anodische Halbzelle 122 ist mit einem anodischen Elektrolyt 128 befüllt, die kathodische Halbzelle 124 mit einem kathodischen Elektrolyt 130.

In den kathodischen Elektrolyt 130 der kathodischen Halbzelle 124 taucht eine Elektrode 132 in Form eine Kathode 134 ein. Die Kathode 134 ist elektrisch leitend mit dem Minuspol 136 der Spannungsquelle 118 verbunden.

In den anodischen Elektrolyt 128 der anodischen Halbzelle 122 taucht eine Elektrode 138 in Form einer Anode 140 ein. Die Anode 140 ist elektrisch leitend mit dem Pluspol 142 der Spannungsquelle 118 verbunden.

Die Anode 140 besteht bei einem Ausführungsbeispiel des Elektrolyseurs 110 aus dem anodischen Katalysator 144.

Bei einem anderen Ausführungsbeispiel ist die Anode 140 aus dem anodischen Katalysator 144 ausgebildet.

Bei einem weiteren Ausführungsbeispiel enthält die Anode 140 den anodischen Katalysator 144.

Bei einem weiteren Ausführungsbeispiel ist die Anode 140 mit dem anodischen Katalysator 144 beschichtet.

Bei einem weiteren Ausführungsbeispiel steht die Anode 140 elektrisch leitend mit dem anodischen Katalysator 144 in Kontakt.

Bei dem in Figur 3 dargestellten Ausführungsbeispiel ist die Anode 140 massiv ausgebildet.

Bei einem weiteren Ausführungsbeispiel ist die Anode 140 netzförmig ausgebildet.

Der Separator 126 ist in Form einer Anionenaustauschmembran 146 ausgebildet. Sie ist auf ihrer der anodischen Halbzelle 122 zugewandten Seitenfläche mit dem anodischen Katalysator 144 beschichtet.

Der anodische Katalysator 144 ist bei dem in Figur 3 dargestellten Ausführungsbeispiel Nickel. Bei einem weiteren Ausführungsbeispiel ist der anodische Katalysator 146 Iridium oder Cobalt oder enthält Nickel, Iridium und/oder Cobalt. Bei weiteren Ausführungsbeispielen ist oder enthält der anodische Katalysator NiOₓ, NiCeOₓ, NiCoOₓ, NiCuOₓ, NiFeOₓ, NiLaOₓ, IrOₓ, CoFeOₓ oder CoOₓ.

Die Kathode 34 ist bei dem in Figur 3 dargestellten Ausführungsbeispiel aus Kohlenstoff ausgebildet.

Bei einem weiteren Ausführungsbeispiel ist die Kathode 34 aus Edelstahl ausgebildet.

Anders als bei dem Ausführungsbeispiel des Elektrolyseurs 10 erfolgt die Reduktion der Protonen 130 nicht an der Kathode 134. Beim Elektrolyseur 110 wird ein anderer Mechanismus genutzt. Hierfür sind in dem kathodischen Elektrolyt 128 reduzierbare Kationen 148 gelöst. Bei den reduzierbaren Kationen 148 handelt es sich um ein V³⁺-Ionen 150.

Die reduzierbaren Kationen 148 können durch Aufnahme eines Elektrons 152 zu reduzierten Kationen 154 reduziert werden.

Das reduzierbare Kation 148 wird durch Lösen eines Salzes, welches das reduzierbare Kation 148 enthält, in den kathodischen Elektrolyt 130 eingebracht.

Die reduzierbaren Kationen 148 nehmen jedoch nicht direkt Elektronen 152 an der Kathode 134 auf.

In den kathodischen Elektrolyt 130 ist ein Komplexbildner 156 in Form eines komplexbildenden Moleküls 158 eingebracht. Bei dem beschriebenen Ausführungsbeispiel handelt es sich bei dem komplexbildenden Molekül 158 um Cystein 160.

Das reduzierbare Kation 148, also das V³⁺-Ion 150, bildet zusammen mit dem Cystein 160 einen Kationen-Komplex 162. Das reduzierbare Kation bildet ein erstes Zentralteilchen 164 des Kationen-Komplexes 162, welcher drei das erste Zentralteilchen 164 umgebende erste Liganden 166 umfasst. Die ersten Liganden 166 werden durch das komplexbildende Molekül 158, also durch Cystein 160 gebildet.

Bei dem Kationen-Komplex 162 handelt es sich um einen katalytisch inaktiven oder im Wesentlichen inaktiven chemischen Komplex.

Nimmt der Kationen-Komplex 162 an der Kathode 134 ein Elektron 152 auf, wird das reduzierbare Kation 148, also das V³⁺-Ion 150, reduziert und in das reduzierte Kation 154 in Form des V²⁺-Ion 155 umgewandelt. Dadurch entsteht ein Mediator-Komplex 168 mit dem reduzierten Kation 154 als zweitem Zentralteilchen 170, welches von drei zweiten Liganden 172 umgeben ist, bei dem es sich um Cystein 160 handelt. Somit sind bei dem beschriebenen Ausführungsbeispiel die ersten Liganden 166 und die zweiten Liganden 172 identisch.

Beim Mediator-Komplex 168 handelt es sich um einen katalytisch aktiven chemischen Komplex. Dieser unterstützt beziehungsweise bewirkt die Aufspaltung molekularen Wassers 112 in molekularen Wasserstoff 114 und Hydroxidionen 174 unter Abgabe eines Elektrons 152. Bei der Aufspaltung von Wasser 112 wird also der Mediator-Komplex 168 wieder in den Kationen-Komplex 162 umgewandelt. Dieser kann dann wieder ein Elektron 152 an der Kathode 134 aufnehmen und in den Mediator-Komplex 168 umgewandelt werden.

Die Hydroxidionen 174 wandern durch die Anionenaustauschmembran 146, die nur für Anionen, also insbesondere die Hydroxidionen 174, permeabel ist, in die anodische Halbzelle 122 und werden durch Abgabe von Elektronen an die Anode 140 zu molekularem Sauerstoff 118 oxidiert unter Bildung von Wasser 112. Zur Unterstützung der Sauerstoffentwicklungsreaktion dient der anodische Katalysator 144.

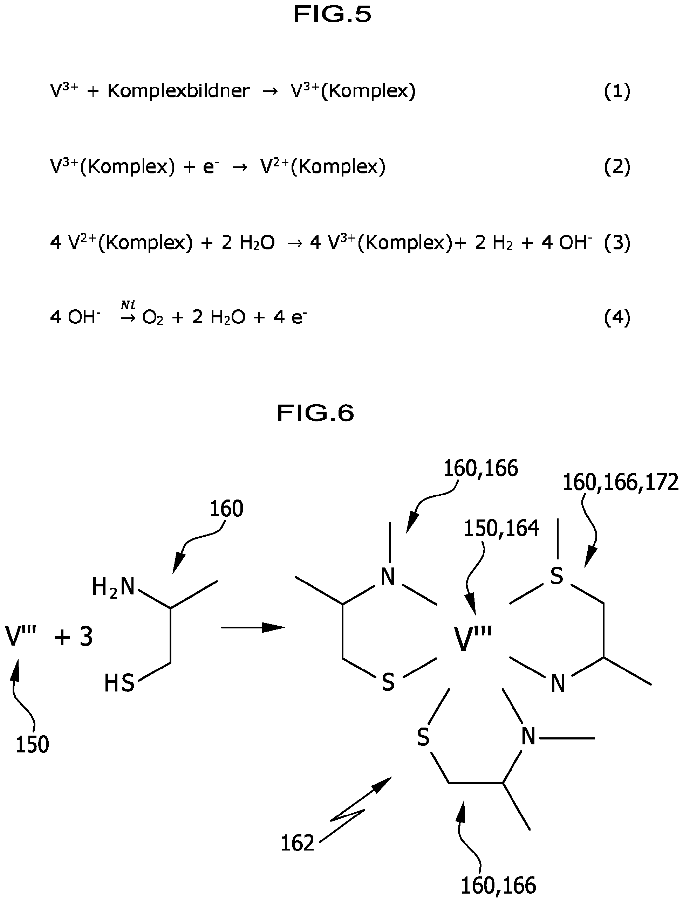

Die relevanten Reaktionsgleichungen der beschriebenen Prozesse sind in Figur 5 dargestellt.

Gleichung (1) stellt die Bildung des Kationen-Komplexes 162 dar.

Die Umwandlung des Kationen-Komplexes 162 durch Aufnahme eines Elektrons 152 in den Mediator-Komplex 168 ist durch Gleichung (2) wiedergegeben.

Die eigentliche Aufspaltung des Wassers 112 wird durch Gleichung (3) angegeben.

Gleichung (4) beschreibt die Sauerstoffentwicklungsreaktion in der anodischen Halbzelle 122 mit Nickel als anodischem Katalysator 144.

Die Figuren 6 bis 8 veranschaulichen die Reaktionsgleichungen (1), (2) und (3), die in der anodischen Halbzelle 122 ablaufen.

Figur 6 zeigt schematisch die Bildung des Kationen-Komplexes 162.

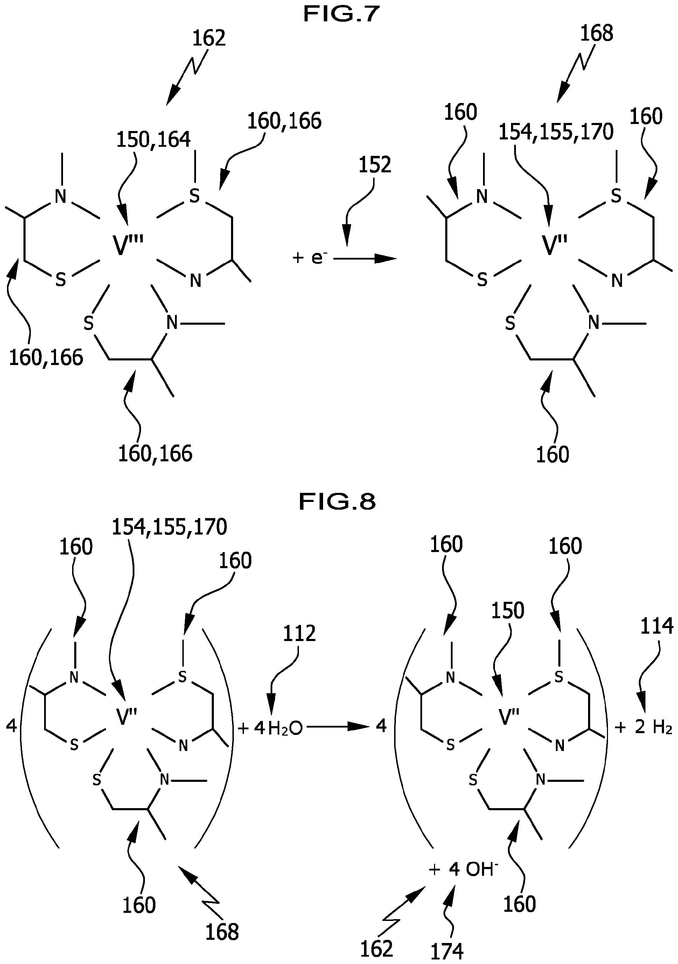

In Figur 7 ist die Umwandlung des Kationen-Komplexes in den Mediator-Komplex 168 schematisch dargestellt.

Und schließlich zeigt Figur 8 die Spaltung von Wasser 112 in molekularen Wasserstoff 114 und Hydroxidionen 174 unter gleichzeitiger Rückwandlung des Mediator-Komplexes 168 in den Kationen-Komplex 162.

Als kathodischer Elektrolyt 130 wird ebenso wie als anodischer Elektrolyt 128 Wasser 112 oder eine wässrige Lösung eingesetzt. Ein pH-Wert des anodischen Elektrolyts 128 wird auf einen Wert von mindestens 7 eingestellt, insbesondere von mindestens 9. So herrscht in der anodischen Halbzelle 122 ein basisches Milieu.

Der kathodische Elektrolyt 130 wird so eingestellt, dass er einen pH-Wert in einem Bereich von 0 bis etwa 9 aufweist.

Bevorzugt unterscheiden sich die pH-Werte des anodischen Elektrolyts 128 und des kathodischen Elektrolyts 130 und definieren einen pH-Gradienten.

Um den pH-Wert des kathodischen Elektrolyts 130 stabil zu halten, enthält die kathodische Halbzelle 124 bei dem beschriebenen Ausführungsbeispiel einen pH-Wert-Regulator. Bei diesem handelt es sich um Schwefelsäure (H₂SO₄).

Bei alternativen Ausführungsbeispielen wird der pH-Wert-Regulator durch Salzsäure (HCl), Essigsäure, Phosphorsäure und/der einen Phosphorsäure-Puffer gebildet.

Der beschriebene Elektrolyseur 110 weist ein theoretisches Zellpotential von 0,66 V auf. Die Teilreaktion gemäß Gleichung (2) in Figur 5 definiert ein Potential von -0,26 Volt. Das Potential der die Wasserspaltung angebenden Reaktionsgleichung (3) in Figur 5 beträgt 0 V.

Wie bereits eingangs erwähnt, beträgt das Potential der Sauerstoffentwicklungsreaktion gemäß Gleichung (4) in Figur 5 0,401 V, so dass sich das Zellpotential als Summe der Potentiale der Teilreaktionen gemäß den Gleichungen (2) und (4) in Figur 5 zu dem theoretischen Zellpotential von 0,66 V addieren. Dieses liegt somit deutlich unterhalb des eingangs genannten Wertes aktuell eingesetzter Anionenaustauschmembran-Elektrolyseure.

Bei dem Ausführungsbeispiel des Elektrolyseurs 110 wird Vanadylsulfat (VOS₄) eingesetzt, und zwar von der Firma Sigma-Aldrich® mit der Produktnummer 233706. Es handelt sich dabei um blaues Pulver oder blaue Kristalle, die eingelagertes Wasser enthalten.

Bei weiteren Ausführungsbeispielen werden als reduzierbare Kationen 148 Cr³⁺ und/oder Fe³⁺ eingesetzt, die in ihrer reduzierten Form als reduzierte Kationen 154 Cr²⁺ beziehungsweise Fe²⁺ Redox-Paare in der Form Cr³⁺/Cr²⁺ beziehungsweise Fe³⁺/Fe²⁺ bilden.

Diese alternativen Redox-Paare können in den kathodischen Elektrolyt 130 durch Lösen entsprechender Salze eingebracht werden, also insbesondere durch Lösen von Chrom- oder Eisensalzen.

Bei weiteren Ausführungsbeispielen werden reduzierbare Metallionen der Übergangsmetalle Ruthenium (Ru), Mangan (Mn), Rhodium (Rh) oder Cobalt (Co) eingesetzt.

Bei weiteren Ausführungsbeispielen werden reduzierbare Metallionen der Lanthanoiden Europium (Eu) oder Cer (Ce) eingesetzt.

Durch das Lösen des komplexbildenden Moleküls 158 bildet sich in der kathodischen Halbzelle 124 ein saures Milieu aus.

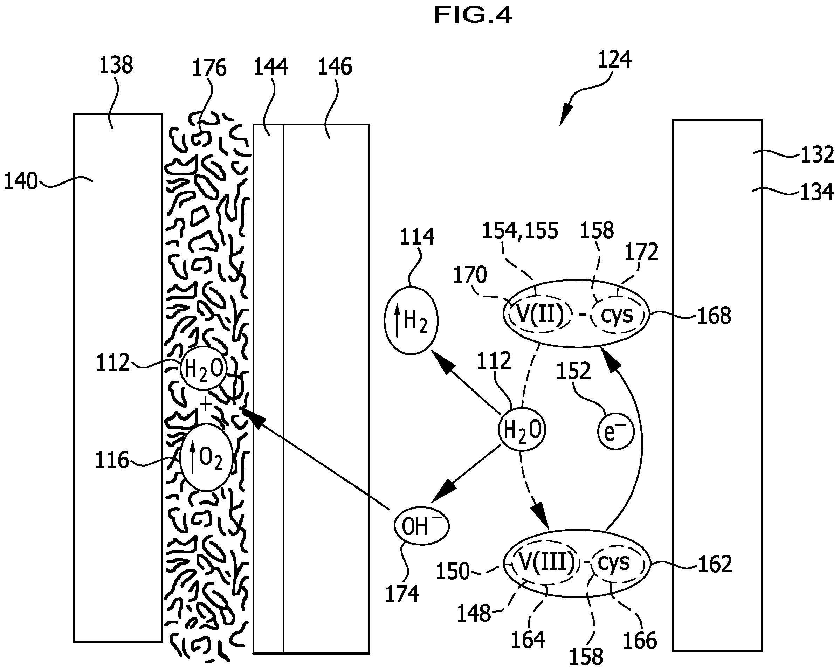

Figur 4 zeigt nochmals den Elektrolyseprozess etwas vergrößert dargestellt. Es ist gut erkennbar, dass in der kathodischen Halbzelle 124 ein kontinuierlicher Prozess der Umwandlung des Kationen-Komplexes 162 in den Mediator-Komplex 168 stattfindet. Durch Elektronenabgabe vom Mediator-Komplex 168 kann Wasser 112 gespalten und der Mediator-Komplex 168 wieder in den Kationen-Komplex 162 überführt werden, der ein Elektron 152 von der Kathode 134 aufnehmen kann.

In Figur 4 ist schematisch dargestellt, dass zwischen der Anionenaustauschmembran 146 und der Anode 140 eine poröse Transportschicht 176 aus Edelstahl angeordnet ist. Diese erleichtert das Abführen des gebildeten gasförmigen Sauerstoffs 116.

Das beschriebene Ausführungsbeispiel des Elektrolyseurs 110 hat somit den Vorteil, dass er mit deutlich geringerer Zellspannung betrieben werden kann. Da die Leistungsaufnahme des Elektrolyseurs 10 beziehungsweise 110 definiert wird durch das Produkt aus Strom und Spannung und die Eingangsleistung direkt korreliert ist mit der Umwandlung von Wasser 112 zu Wasserstoff 114 und Sauerstoff 116, bedeutet die Absenkung der Zellspannung, dass die Eingangsleistung verringert wird und somit die Betriebskosten, insbesondere für elektrische Energie, im Vergleich zu herkömmlichen Elektrolyseuren 10 beim Elektrolyseur 110 deutlich verringert sind.

Die vorgeschlagene Ausbildung des Elektrolyseurs 110 ermöglicht insbesondere den Einsatz kostengünstiger Katalysatoren 144 für die anodische Halbzelle 122. In der kathodischen Halbzelle 124 wird kein Katalysator an sich benötigt. Die katalytische Eigenschaft des Mediator-Komplexes 168 macht den Einsatz eines kathodischen Katalysators überflüssig. Insbesondere kann so auf den Einsatz von Edelmetallen als kathodische Katalysatoren vollständig verzichtet werden.

Die Ausbildung des Mediator-Komplexes 168 ist kostengünstig und einfach zu realisieren. Es wird lediglich ein Komplexbildner 156 benötigt. Cystein 160 ist umweltverträglich und kostengünstig verfügbar.

Ferner kann die Wasserstoffentwicklungsreaktion mit einer hohen Reaktionskinetik ablaufen, da der Mediator-Komplex 168 überall in der kathodischen Halbzelle 124 zur Wasserspaltung verfügbar ist.

Zudem kann als Elektrolyt 128 beziehungsweise 130 Wasser eingesetzt werden. Die Gefahr von Korrosionen des Elektrolyseurs 110 kann dadurch minimiert werden. Auch der Einsatz schwach saurer kathodischer Elektrolyte 130 und schwach alkalischer anodischer Elektrolyte 128 ist möglich.

Durch den beschriebenen Elektrolyseur 110 können die Nachteile herkömmlicher Elektrolyseure 10 überwunden werden.

Der Elektrolyseur 110 kann insbesondere dafür eingesetzt werden, um Wasserstoff 114 aus elektrischer Energie, die durch erneuerbare Energien bereitgestellt wird, aus Wasser 112 zu erzeugen. Es sind deutlich geringere Anforderungen hinsichtlich der Kosten und der Sicherheit als bei Elektrolyseuren 10 nach dem Stand der Technik erforderlich. Zudem kann Wasserstoff 114 mit einem Reinheitsgrad erzeugt werden.

Berücksichtigt man, dass der globale Bedarf an Wasserstoff bei etwa 60 Millionen pro Jahr liegt und ständig zunimmt, wird mit derzeitigen Elektrolyseuren 10 eine Gesamtmenge von etwa 330 Millionen Tonnen Kohlenstoffdioxid zur Ausbildung des Wasserstoffs an die Atmosphäre abgegeben, wenn fossile Energieträger zur Bereitstellung der elektrischen Energie eingesetzt werden.

Die Erzeugung von Kohlenstoffdioxid kann durch Einsatz elektrischer Energie aus erneuerbaren Energien auf Null reduziert werden. Dies ist grundsätzlich auch bei Elektrolyseuren 10 denkbar.

In jedem Fall sind die Anschaffungs- und Betriebskosten für den Elektrolyseur 110 im Vergleich zum Elektrolyseur 10 deutlich geringer und somit die Kosten für die Herstellung von Wasserstoff 114 ebenfalls geringer. Der vorgeschlagene Elektrolyseur 110 ermöglicht es - andersherum ausgedrückt - mit demselben Aufwand an Kosten und Energie mehr Wasserstoff 114 für neue Antriebstechnologien bereitzustellen und trotzdem CO₂-Emissionen signifikant zu verringern.

Die beschriebenen Elektrolyseure 110 lassen sich insbesondere zur Elektrolyse von Wasser 112, also insbesondere zur Herstellung von Wasserstoff 114 sowie zur Speicherung elektrischer Energie nutzen.

### Bezugszeichenliste

- 10: Elektrolyseur
- 12: Wasser
- 14: Wasserstoff
- 16: Sauerstoff
- 18: Spannungsquelle
- 20: Elektrolysezelle
- 22: anodische Halbzelle
- 24: kathodische Halbzelle
- 26: Separator
- 28: Elektrolyt
- 30: Proton
- 32: Elektrode
- 34: Kathode
- 36: Minuspol
- 38: Elektrode
- 40: Anode
- 42: Pluspol
- 44: kathodischer Katalysator
- 46: anodischer Katalysator
- 110: Elektrolyseur
- 112: Wasser
- 114: Wasserstoff
- 116: Sauerstoff
- 118: Spannungsquelle
- 120: Elektrolysezelle
- 122: anodische Halbzelle
- 124: kathodische Halbzelle
- 126: Separator
- 128: anodischer Elektrolyt
- 130: kathodischer Elektrolyt
- 132: Elektrode
- 134: Kathode
- 136: Minuspol
- 138: Elektrode
- 140: Anode
- 142: Pluspol
- 144: anodischer Katalysator
- 146: Anionenaustauschmembran
- 148: reduzierbares Kation
- 150: V³⁺-Ion
- 152: Elektron
- 154: reduziertes Kation
- 155: V²⁺-Ion
- 156: Komplexbildner
- 158: komplexbildendes Molekül
- 160: Cystein
- 162: Kationen-Komplex
- 164: erstes Zentralteilchen
- 166: erster Ligand
- 168: Mediator-Komplex
- 170: zweites Zentralteilchen
- 172: zweiter Ligand
- 174: Hydroxidion
- 176: Transportschicht

## Patentansprüche

1. Elektrolyseur (110) zum Aufspalten von molekularem Wasser (112) in molekularen Wasserstoff (114) und molekularen Sauerstoff (116) unter Einsatz elektrischer Energie, welcher Elektrolyseur (110) eine anodische Halbzelle (122) mit einer Anode (140) und eine kathodische Halbzelle (124) mit einer Kathode (134) umfasst, wobei die anodische Halbzelle (122) und die kathodische Halbzelle (124) durch einen Separator (126) voneinander getrennt sind, wobei die anodische Halbzelle (122) einen anodischen Elektrolyt (128) umfasst, welcher mit der Anode (140) in Kontakt steht, und wobei die kathodische Halbzelle (124) einen kathodischen Elektrolyt (130) umfasst, welcher mit der Kathode (134) in Kontakt steht, wobei die anodische Halbzelle (122) einen anodischen Katalysator (144) umfasst, **dadurch gekennzeichnet, dass** die kathodische Halbzelle (124) zur Erzeugung mindestens eines Mediator-Komplexes (168) mindestens einen Kationen-Komplex (162) enthält, dass der mindestens eine Kationen-Komplex (162) durch Aufnahme mindestens eines Elektrons (152) an der Kathode zum Mediator-Komplex (168) reduzierbar ist und dass der Mediator-Komplex (168) ein katalytisch aktiver chemischer Komplex zum Aufspalten des molekularen Wassers (H₂O) (112) in molekularen Wasserstoff (H₂) (114) und Hydroxidionen (OH⁻) (174) unter Abgabe mindestens eines Elektrons (152) ist.

2. Elektrolyseur nach Anspruch 1, **dadurch gekennzeichnet, dass**
a) der mindestens eine Kationen-Komplex (162) ein katalytisch
inaktiver oder im Wesentlichen inaktiver chemischer Komplex ist und/oder
b) der Kationen-Komplex (162) und der Mediator-Komplex (168) im kathodischen Elektrolyt (130) gelöst sind.

3. Elektrolyseur nach einem der voranstehenden Ansprüche, **dadurch gekennzeichnet, dass** der mindestens eine Kationen-Komplex (162) gebildet ist durch mindestens ein erstes Zentralteilchen (164) und mindestens einen ersten Liganden (166), welcher das mindestens eine erste Zentralteilchen (164) umgibt, dass der Mediator-Komplex (168) gebildet ist durch mindestens ein zweites Zentralteilchen (170) und mindestens einen zweiten Liganden (172), welcher das mindestens eine zweite Zentralteilchen (170) umgibt, dass das mindestens eine erste Zentralteilchen (164) und das mindestens eine zweite Zentralteilchen (170) ein Redox-Paar bilden derart, dass das erste Zentralteilchen (164) durch Aufnahme mindestens eines Elektrons (152) zum zweiten Zentralteilchen (170) reduzierbar ist und dass das mindestens eine zweite Zentralteilchen (170) durch Abgabe mindestens eines Elektrons (152) zum ersten Zentralteilchen (164) oxidierbar ist.

4. Elektrolyseur nach Anspruch 3, **dadurch gekennzeichnet, dass**
a) das mindestens eine erste Zentralteilchen (164) ein um mindestens eine Oxidationsstufe reduzierbares Kation (148) ist und dass das mindestens eine zweite Zentralteilchen (170) das um die mindestens eine Oxidationsstufe reduzierte Kation (154) ist,
wobei insbesondere das reduzierbare Kation (148) und das reduzierte Kation (154) Ionen unterschiedlicher Oxidationsstufen desselben Metalls sind,
wobei weiter insbesondere das Metall ein Metall aus der Gruppe der Übergangsmetalle ist, insbesondere aus der Gruppe der Lanthanoiden,
wobei weitere insbesondere
a1) das Übergangsmetall Ruthenium (Ru), Chrom (Cr), Vanadium (V), Mangan (Mn), Rhodium (Rh), Cobalt (Co) oder Eisen (Fe) ist
und/oder
a2) das Lanthanoid Europium (Eu) oder Cer (Ce) ist,
und/oder
b) der Kationen-Komplex (162) gebildet ist durch ein einziges erstes Zentralteilchen (164) und/oder dass der Mediator-Komplex (168) gebildet ist durch ein einziges zweites Zentralteilchen (170), wobei insbesondere das einzige erste Zentralteilchen (164) des Kationen-Komplexes (162) von mindestens drei ersten Liganden (166) umgeben ist und/oder dass der Mediator-Komplex (168) von mindestens drei zweiten Liganden (172) umgeben ist.

5. Elektrolyseur nach Anspruch 3 oder 4, **dadurch gekennzeichnet, dass**
a) der mindestens eine erste Ligand (166) und der mindestens eine zweite Ligand (172) identisch sind
und/oder
b) der mindestens eine erste Ligand (166) und/oder der mindestens eine zweite Ligand (172) in Form eines Komplexbildners (156) ausgebildet sind,
wobei insbesondere der Komplexbildner (156) in Form eines komplexbildenden Moleküls (158) ausgebildet ist,
und/oder
c) der mindestens eine erste Ligand (166) und/oder der mindestens eine zweite Ligand (172) Mercaptoessigsäure, 2-Mercaptopropionsäure, Cysteamin, Cystein, Cysteinmethylester oder Brenzcatechin ist oder enthält
und/oder
d) das mindestens eine erste Zentralteilchen (164) in den kathodischen Elektrolyt (130) durch Lösen eines Salzes, das das mindestens eine erste Zentralteilchen (164) enthält, eingebracht ist
und/oder
e) der mindestens eine erste Ligand (166) und/oder der mindestens eine zweite Ligand (172) in den kathodischen Elektrolyt (130) durch Lösen eingebracht ist.

6. Elektrolyseur nach einem der voranstehenden Ansprüche, **dadurch gekennzeichnet, dass**
a) der Separator (126) in Form einer Anionenaustauschmembran (146) ausgebildet ist,
wobei insbesondere die Anionenaustauschmembran (146) für Hydroxdionen (174) permeabel ausgebildet ist,
und/oder
b) der kathodische Elektrolyt (130) Wasser (112) oder eine wässrige Lösung ist und/oder dass der anodische Elektrolyt (138) Wasser (112) oder eine wässrige Lösung ist
und/oder
c) der anodische Elektrolyt (128) einen pH-Wert von mindestens etwa 7 aufweist, insbesondere von mindestens etwa 9,
und/oder
d) der kathodische Elektrolyt (130) einen pH-Wert in einem Bereich
von 0 bis etwa 9 aufweist
und/oder
e) sich ein pH-Wert des anodischen Elektrolyts (128) und ein pH-Wert des kathodischen Elektrolyts (130) unterscheiden und einen pH-Gradient definieren,
wobei insbesondere der pH-Gradient mindestens 1, insbesondere mindestens 3, weiter insbesondere mindestens 5, beträgt.

7. Elektrolyseur nach einem der voranstehenden Ansprüche, **dadurch gekennzeichnet, dass**
a) die kathodische Halbzelle (124) einen pH-Wert-Regulator enthält, wobei insbesondere der pH-Wert-Regulator Salzsäure (HCl), Schwefelsäure (H₂SO₄), Essigsäure, Phosphorsäure und/oder ein Phosphorsäure-Puffer ist oder enthält,
und/oder
b) die Anode (140) aus dem anodischen Katalysator (144) besteht oder aus dem anodischen Katalysator (144) ausgebildet ist oder den anodischen Katalysator (144) enthält oder mit dem anodischen Katalysator (144) beschichtet ist oder mit dem anodischen Katalysator (144) elektrisch leitend in Kontakt steht
oder
der Separator (126) mit dem anodischen Katalysator (144) beschichtet ist oder mit dem anodischen Katalysator (144) elektrisch leitend in Kontakt steht
und/oder
c) die Anode (140) massiv oder netzförmig ausgebildet ist
und/oder
d) der anodische Katalysator (144) Nickel, Iridium oder Cobalt ist oder Nickel, Iridium und/oder Cobalt enthält, insbesondere in der Form NiOₓ, NiCeOₓ, NiCoOₓ, NiCuOₓ, NiFeOₓ, NiLaOₓ, IrOₓ, CoFeOₓ oder CoOₓ,
und/oder
e) die Kathode (134) aus Kohlenstoff oder Edelstahl ausgebildet.

8. Verfahren zum Aufspalten von molekularem Wasser (112) in molekularen Wasserstoff (114) und molekularen Sauerstoff (116) unter Einsatz elektrischer Energie, bei welchem Verfahren Hydroxidionen (OH⁻) (174) in einer anodischen Halbzelle (122) mit einer Anode (140) unter Mitwirkung eines anodischen Katalysators (144) oxidiert werden, wobei die anodische Halbzelle (122) von einer kathodischen Halbzelle (124) mit einer Kathode (134) durch einen Separator (126) getrennt ist, wobei die anodische Halbzelle (122) einen anodischen Elektrolyt (128) umfasst, welcher mit der Anode (140) in Kontakt steht, und wobei die kathodische Halbzelle (124) einen kathodischen Elektrolyt (130) umfasst, welcher mit der Kathode (134) in Kontakt steht, **dadurch gekennzeichnet, dass** das molekulare Wasser (H₂O) (112) in der kathodischen Halbzelle (124) unter Mitwirkung mindestens eines Mediator-Komplexes (168) in molekularen Wasserstoff (H₂) (114) und Hydroxidionen (OH⁻) (174) aufgespalten werden, dass in der kathodischen Halbzelle (124) der mindestens eine Mediator-Komplex (168) aus mindestens einem Kationen-Komplex (162) gebildet wird, dass der Mediator-Komplex (168) ein katalytisch aktiver chemischer Komplex zum Aufspalten des molekularen Wassers (H₂O) (112) in molekularen Wasserstoff (H₂) (114) und Hydroxidionen (OH⁻) (174) unter Abgabe mindestens eines Elektrons (152) ist und dass der mindestens eine Kationen-Komplex (162) durch Aufnahme mindestens eines Elektrons (152) an der Kathode (134) zum Mediator-Komplex (168) reduziert wird.

9. Verfahren nach Anspruch 8, **dadurch gekennzeichnet, dass**
a) als der mindestens eine Kationen-Komplex (162) ein katalytisch inaktiver oder im Wesentlichen inaktiver chemischer Komplex eingesetzt wird
und/oder
b) der Kationen-Komplex (162) und der Mediator-Komplex (168) im kathodischen Elektrolyt (130) gelöst werden.

10. Verfahren nach Anspruch 8 oder 9, **dadurch gekennzeichnet, dass** der mindestens eine Kationen-Komplex (162) gebildet wird durch mindestens ein erstes Zentralteilchen (164) und mindestens einen ersten Liganden (166), welcher das mindestens eine erste Zentralteilchen (164) umgibt, dass der Mediator-Komplex (168) gebildet wird durch mindestens ein zweites Zentralteilchen (170) und mindestens einen zweiten Liganden (172), welcher das mindestens eine zweite Zentralteilchen (170) umgibt, dass das mindestens eine erste Zentralteilchen (164) und das mindestens eine zweite Zentralteilchen (170) ein Redox-Paar bilden derart, dass das erste Zentralteilchen (164) durch Aufnahme mindestens eines Elektrons (152) zum zweiten Zentralteilchen (170) reduziert wird und dass das mindestens eine zweite Zentralteilchen (170) durch Abgabe mindestens eines Elektrons (152) zum ersten Zentralteilchen (164) oxidiert wird.

11. Verfahren nach Anspruch 10, **dadurch gekennzeichnet, dass**
a) als das mindestens eine erste Zentralteilchen (164) ein um mindestens eine Oxidationsstufe reduzierbares Kation (148) eingesetzt wird und das mindestens eine zweite Zentralteilchen (170) das um die mindestens eine Oxidationsstufe reduzierte Kation (154) ist,
wobei insbesondere als das reduzierbare Kation (148) und das reduzierte Kation (154) Ionen unterschiedlicher Oxidationsstufen desselben Metalls eingesetzt werden.
wobei weiter insbesondere als das Metall ein Metall aus der Gruppe der Übergangsmetalle eingesetzt wird, insbesondere aus der Gruppe der Lanthanoiden,
wobei weiter insbesondere
a1) als das Übergangsmetall Ruthenium (Ru), Chrom (Cr), Vanadium (V), Mangan (Mn), Rhodium (Rh), Cobalt (Co) oder Eisen (Fe) eingesetzt wird
und/oder
a2) als das Lanthanoid Europium (Eu) oder Cer (Ce) eingesetzt wird,
und/oder
b) der Kationen-Komplex (162) gebildet wird durch ein einziges erstes Zentralteilchen (164) und/oder dass der Mediator-Komplex (168) gebildet wird durch ein einziges zweites Zentralteilchen (170), wobei insbesondere das einzige erste Zentralteilchen (164) des Kationen-Komplexes (162) von mindestens drei ersten Liganden (166) umgeben wird und/oder dass der Mediator-Komplex (168) von mindestens drei zweiten Liganden (172) umgeben wird.

12. Verfahren nach Anspruch 10 oder 11, **dadurch gekennzeichnet, dass**
a) der mindestens eine erste Ligand (166) und der mindestens eine zweite Ligand (172) identisch eingesetzt werden
und/oder
b) der mindestens eine erste Ligand (166) und/oder der mindestens eine zweite Ligand (172) in Form eines Komplexbildners (156) ausgebildet werden,
wobei insbesondere der Komplexbildner (156) in Form eines komplexbildenden Moleküls (158) ausgebildet wird und/oder
c) als der mindestens eine erste Ligand (166) und/oder der mindestens eine zweite Ligand (172) Mercaptoessigsäure, 2-Mercaptopropionsäure, Cysteamin, Cystein, Cysteinmethylester oder Brenzcatechin eingesetzt wird
und/oder
d) das mindestens eine erste Zentralteilchen (164) in den kathodischen Elektrolyt (130) durch Lösen eines Salzes, das das mindestens eine erste Zentralteilchen (164) enthält, eingebracht wird
und/oder
e) der mindestens eine erste Ligand (166) und/oder der mindestens eine zweite Ligand (172) in den kathodischen Elektrolyt (130) durch Lösen eingebracht wird.

13. Verfahren nach einem der Ansprüche 8 bis 12, **dadurch gekennzeichnet, dass**
a) der Separator (126) in Form einer Anionenaustauschmembran (146) ausgebildet wird,
wobei insbesondere die Anionenaustauschmembran (146) für Hydroxidionen (OH⁻) (174) permeabel ausgebildet wird,
und/oder
b) als der kathodische Elektrolyt (130) Wasser (112) oder eine wässrige Lösung ist und/oder dass der anodische Elektrolyt (128) Wasser (112) oder eine wässrige Lösung eingesetzt wird
und/oder
c) der anodische Elektrolyt (128) mit einem pH-Wert von mindestens etwa 7 eingesetzt wird, insbesondere von mindestens etwa 9,
und/oder
d) der kathodische Elektrolyt (130) mit einem pH-Wert in einem Bereich von 0 bis etwa 9 eingesetzt wird
und/oder
e) ein anodischer Elektrolyt (128) und ein kathodischer Elektrolyt (130) mit sich unterscheidenden pH-Werten eingesetzt werden und einen pH-Gradient definieren,
wobei insbesondere anodische und kathodische Elektrolyten (128, 130) eingesetzt werden, so dass der pH-Gradient mindestens 1, insbesondere mindestens 3, weiter insbesondere mindestens 5, beträgt.

14. Verfahren nach einem der Ansprüche 8 bis 13, **dadurch gekennzeichnet, dass**
a) der kathodischen Halbzelle (124) ein pH-Wert-Regulator zugegeben wird,
wobei insbesondere als der pH-Wert-Regulator Salzsäure (HCl), Schwefelsäure (H₂SO₄), Essigsäure, Phosphorsäure und/oder ein Phosphorsäure-Puffer zugegeben wird,
und/oder
b) die Anode (140) ausgebildet wird derart, dass sie aus dem anodischen Katalysator (144) besteht oder aus dem anodischen Katalysator (144) ausgebildet ist oder den anodischen Katalysator (144) enthält oder mit dem anodischen Katalysator (144) beschichtet ist oder mit dem anodischen Katalysator (144) elektrisch leitend in Kontakt steht
und/oder
c) der Separator (126) mit dem anodischen Katalysator (144) beschichtet wird oder mit dem anodischen Katalysator (144) elektrisch leitend in Kontakt gebracht wird
und/oder
d) die Anode (140) massiv oder netzförmig ausgebildet wird
und/oder
e) ein anodischer Katalysator (144) eingesetzt wird, welcher Nickel, Iridium oder Cobalt ist oder Nickel, Iridium und/oder Cobalt enthält, insbesondere in der Form NiOₓ, NiCeOₓ, NiCoOₓ, NiCuOₓ, NiFeOₓ, NiLaOₓ, IrOₓ, CoFeOₓ oder CoOₓ,
und/oder
c) die Kathode (134) aus Kohlenstoff oder Edelstahl ausgebildet wird.

15. Verwendung eines Elektrolyseurs (110) nach einem der Ansprüche 1 bis 7 zur Durchführung eines Verfahrens nach einem der Ansprüche 8 bis 14.
